# EUROPEAN PATENT APPLICATION

(11) **EP 1 802 126 A1**
(43) Date of publication of application: **27.06.2007**
(21) Application number: 05782309.8
(22) Date of filing: 08.09.2005
(51) Int. Cl.: H04N 7/32, H04N 5/92, H04N 5/76

(54) **IMAGE CODING DEVICE, IMAGE DECODING DEVICE, IMAGE CODING PROGRAM, AND IMAGE DECODING PROGRAM.**

(30) Priority: 13.09.2004 JP 2004265874
(71) Applicant: SHARP KABUSHIKI KAISHA, Osaka, Osaka 545-8522 (JP)
(72) Inventor: AONO, Tomoko, Chiba-shi, Chiba, 262-0033 (JP); NAGATAKI, Shingo, Chiba-shi, Chiba 2600842 (JP); WATANABE, Shuichi, Chiba-shi, Chiba, 266-0005 (JP)
(74) Representative: Brown, Kenneth Richard
(86) International application number: PCT/JP2005/016536
(87) International publication number: WO 2006/030694

(57) **Abstract**

A bitstream comprising only I and P frames can be reproduced at a high speed without increasing the process amount nor degrading the picture quality. A prediction structure of the P frames of a coded bitstream is modified, and a control unit (112) is used to cause a variable length coding unit (105) to add and code a prediction usage flag indicative of whether the P frames can be referred to from the following frames and a reference image number notified, as information indicative of the frame numbers referred to by the P frames, by a motion detection unit (111). The coded image of a frame, in which the prediction usage flag is set up, is stored in a frame memory (109) and can be referred to during predicting and coding the P frames. As a result, during decoding, the decoded image of the frame, in which the prediction usage flag is set up, in the input bitstream is stored in the frame memory, and the decoded image of the frame number indicated by the reference image number of each P frame is extracted from the frame memory and decoded for prediction.

## Description

### TECHNICAL FIELD

The present invention relates to an image coding device, an image decoding device, an image coding program, and an image decoding program, and particularly to an image coding device, an image decoding device, an image coding program, and an image decoding program suitable for high-speed reproduction of interframe or interfiled predictive coded image data, and more specifically, to an image coding device, an image decoding device, an image coding program, and an image decoding program using an image prediction method suitable for high speed reproduction of a coded bitstream composing only of I frames and P frames and without including B frames (bidirectional prediction coded frames).

### BACKGROUND OF THE INVENTION

Image coding systems include MPEG-1, MPEG-2, MPEG-4, H.263, and so on. In these systems, a bitstream is arranged by being coded by frames having three kinds of prediction type named as I frame (intra-coded frame), P frame (single directional prediction coded frame), and B frame (bidirectional prediction coded frame). Although the frame is used as a target here, a field may be used as the target likewise.

As shown in, for embodiment, "MPEG Image Reproduction Device and MPEG Image Reproduction Method" disclosed in Japanese Laid-Open Patent Publication No. 11-155129 shown in Patent Document 1, these bitstreams can be also reproduced at high speed by skipping only B frames. Fig. 14 is a schematic diagram illustrating a high speed reproducing operation of a conventional art shown in Patent Document 1. Fig. 14(A) shows an embodiment of a bitstream when MPEG-2 main profile is employed as a coding system. The embodiment has such a structure that two B frames are interposed between I and P frames and between two P frames.

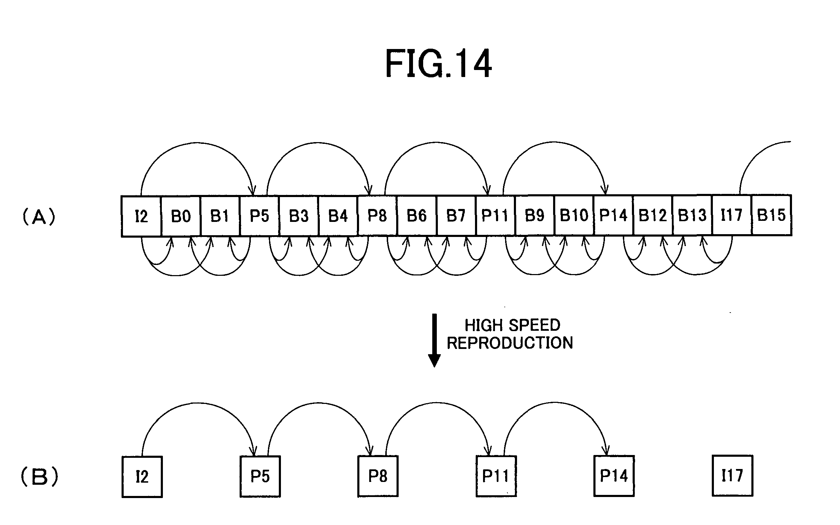

In Fig. 14, symbols I, P, B show a type of predictive coding of the frames and numerals indicate the order in which they are shown. For embodiment, 12 indicates the second I frame to be shown and P5 indicates the fifth P frame to be shown. Further, Fig. 14 shows that images are decoded sequentially from left to right. In the high speed reproduction of the bitstreams, as shown in Fig. 14(B), the high speed reproduction can be realized by skipping decode processing of B frames which are not used for reference from other frames and by decoding and displaying only I and P frames.

That is, in this high speed reproducing operation, since no B frame is used as the reference image of the I and P frames which are decoded and displayed in the high speed reproduction, I and P frames can be normally reproduced without deteriorating image quality even if no B frame is decoded.

Here, since MPEG-2 main profile includes B frames as described above, the smooth high speed reproduction can be realized by skipping the decode processing and display of B frames. However, there is a standard such as MPEG-2 simple profile, MPEG-4 simple profile, and the like using no B frame even if an application, which indispensably requires a short delay and a small amount of processing, is employed as a target.

In MPEG-2 simple profile and MPEG-4 simple profile, the reference image of the P frame is the I or P frame and the I or P frame immediately before it can only be referred to. As methods of reproducing the coded bitstream of MPEG- 2 simple profile and MPEG-4 simple profile at a high speed, there are exemplified technologies, such as:
1) reading, decoding and displaying only bitstreams corresponding to I frames as disclosed in the Japanese Laid-Open Patent Publication No. 63-310293, "Reproduction System of Compress Recorded Image", Patent Document 2;
2) realizing high speed reproduction by omitting a part of decode processing of I and P frames to reduce an amount of processing per one frame as disclosed in the Japanese Laid-Open Patent Publication No. 7-154743, "High Speed Image Reproduction System", Patent Document 3; and
3) realizing high speed reproduction by decoding images at the maximum processing speed permitted for the CPU.
   Patent Document 1: Japanese Laid-Open Patent Publication No. 11-155129
   Patent Document 2: Japanese Laid-Open Patent Publication No. 63-310293
   Patent Document 3: Japanese Laid-Open Patent Publication No. 7-154743

### DISCLOSURE OF THE INVENTION

### PROBLEMS TO BE SOLVED BY THE INVENTION

However, the method 1) disclosed in Patent Document 2 has a disadvantage that image quality is deteriorated because an image is reproduced very roughly, the method 2) disclosed in Patent Document 3 has a disadvantage that since, usually, the same image in reproduction cannot be decoded, errors are accumulated in inter-frame prediction, and thus image quality is deteriorated as time passes, and the method 3) has a disadvantage that a CPU having a capacity more than M times (here, M>1) that required in ordinary decode processing is necessary only for high speed reproduction, and the like.

An object of the present invention, which was made to solve the above problems, is to provide an image coding device, an image decoding device, an image coding program, and an image decoding program in which an amount of processing is not increased and image quality is not deteriorated even in a bitstream including no B frame in high speed reproduction.

A first technical means is an image coding device for coding images as a bitstream only by means of intra-coding and one-direction prediction coding, comprising prediction usage information coding means for coding first data as prediction usage information showing whether or not the images of I frames, in which the images are coded only by means of the intra-coding, or the images of P frames, in which the images are coded by means of the intra-coding and the one-direction prediction coding are images used as reference images to be referred to from other subsequent frames; reference information coding means for coding second data showing the frame numbers of images to be referred to by the P frames as reference information; and high speed reproduction coding means for referring to the images of the frame numbers shown by the second data out of the reference images shown by the first data when the P frames are coded, coding the P frames of the frame numbers at every frame intervals set for high speed reproduction according to a previously designated set speed to create a bitstream for the high speed reproduction and the P frames of the remaining frame numbers which are not set for the high speed reproduction, respectively, storing the coded images of the P frames of the frame numbers at the every frame intervals set for the high speed reproduction, setting the first data as the prediction usage information showing that the coded images of the P frames are referred to from the other subsequent frames, and instructing the prediction usage information coding means to code the first data.

A second technical means is the image coding device as defined in the first technical means, wherein, as to the respective P frames within the ranges separated at the every frame intervals set for the high speed reproduction according to the set speed, the high speed reproduction coding means sets the second data as the reference information showing that the reference images of the same frame number are used as images to be referred to from the reference images when the P frames of the frame numbers at the every frame intervals set for the high speed reproduction are coded and as images to be referred to from the reference images when the P frames of the remaining frame numbers which are not set for the high speed reproduction are coded and instructs the reference information coding means to code the second data.

A third technical means is the image coding device as defined in the first or second technical means, wherein the reference images are disposed only to periodical positions, and the images at every N frames (N: an integer of 2 or more) including the I frames and using the I frames as base points are used as the reference images shown by the first data.

A fourth technical means is the image coding device as defined in the first technical means, wherein, as to the respective P frames within the ranges separated at the every frame intervals set for the high speed reproduction according to the set speed, the high speed reproduction coding means sets the second data as the reference information showing that the images of different frame numbers are referred to by images to be referred to from the reference images when the P frames of the frame numbers at the every frame intervals set for the high speed reproduction are coded and by images to be referred to from the reference images when the P frames of the remaining frame numbers which are not set for the high speed reproduction are coded and instructs the reference information coding means to code the second data.

A fifth technical means is the image coding device as defined in the fourth technical means, wherein the images to be referred to from the reference images when the P frames of the frame numbers at the every frame intervals set for the high speed reproduction are coded are the images at every N frames (N is an integer of 2 or more) including the I frames and using the I frames as base points, and images to be referred to from the reference images, when the P frames of the remaining frame numbers which are not set for the high speed reproduction are coded, are the images of the frames located at arbitrary positions out of the coded images.

A sixth technical means is the image coding device as defined in the fifth technical means, wherein the intervals at the every N frames, at which reference images to be referred to from the reference images are shown, when the P frames of the frame numbers at the every frame intervals set for the high speed reproduction are coded, are frame intervals set according to the set speed previously designated to create the bitstream for the high speed reproduction, and reference images to be referred to from the reference images, when the P frames of the remaining frame numbers which are not set for the high speed reproduction are coded, are the images of the frames located in front of the frames to be coded.

A seventh technical means is the image coding device as defined in the fifth or sixth technical means, wherein when the high speed reproduction coding means sets the first data, which shows whether or not images are used as reference images from the other subsequent frames, as prediction usage information, the high speed reproduction coding means sets the first data to a different value for the images used from the other subsequent frames as reference images depending on whether the images are the images of the frame numbers at the every frame intervals set for the high speed reproduction or the images of the remaining frame numbers which are not set for the high speed reproduction.

An eighth technical means is the image coding device as defined in any one of the first to seventh technical means, wherein when the images of the respective P frames are coded, the coded images of a plurality of frames can be referred to as a reference image to be referred to in each of the P frames.

A ninth technical means is the image coding device as defined in the eighth technical means, wherein when any of the coded images of the plurality of frames is referred to in each of the P frames, it is possible to refer to the coded images of different frames in any unit of a slice unit, a macroblock unit, or a block unit in the respective P frames to be coded as the reference images, and the frame numbers showing the reference images of each unit are coded as the header information of the bitstream.

A tenth technical means is the image coding device as defined in the eighth or ninth technical means, wherein the coded images of the plurality of frames, which can be referred to as the reference images in each of the respective P frames, include at least the images of the frame numbers at the every frame intervals located nearest to the frames to be coded out of the images of the frame numbers at the every frame intervals set according to the previously designated set speed.

An eleventh technical means is an image decoding device for decoding a bitstream obtained by coding images only by means of intra-coding and one-direction prediction coding, comprising prediction usage information decoding means for decoding first data as prediction usage information showing whether or not the images of I frames, in which the images are coded only by the intra-coding, or the images of P frames, in which the images are coded by means of the intra-coding and the one-direction prediction coding are images used as reference images to be referred to from other subsequent frames; reference information decoding means for decoding second data showing the frame numbers to be referred to by the P frames as reference information; and high speed reproduction decoding means for referring to the images of the frame numbers shown by the second data out of the reference images shown by the first data when the P frames are decoded and decoding the P frames of the frame numbers at every frame intervals set for high speed reproduction according to a previously designated reproduction speed.

A twelfth technical means is the image decoding device as defined in the eleventh technical means, wherein when the high speed reproduction decoding means decodes the P frames of the coded bitstream coded according to the set speed previously designated for the high speed reproduction, the high speed reproduction decoding means can decode the P frames using a reproduction speed of an arbitrary value different from the set speed by referring to the image of the frame number shown by the second data of the frame to be decoded as reference information out of reference images shown by the first data as prediction usage information.

A thirteenth technical means is the image decoding device as defined in the eleventh or twelfth technical means, wherein the reference images shown by the first data as prediction usage information are disposed only to periodical positions and are decoded images at every N frames (N: an integer of 2 or more) including the I frames and using the I frames as base points, and, when the P frames of the frame numbers at every frame intervals set for the high speed reproduction according to the previously designated reproduction speed are decoded, the P frames are decoded referring to the decoded images of the frame numbers at the every N frames shown by the first data as reference information.

A fourteenth technical means is the image decoding device as defined in the thirteenth technical means, wherein when the P frames of the coded bitstream coded according to the set speed previously designated for the high speed reproduction are decoded, the intervals of the every N frames at which the reference images are shown are the frame intervals set according to the set speed.

A fifteenth technical means is the image decoding device as defined in any one of the eleventh to fourteenth technical means, wherein when the images of the respective P frames are decoded, the decoded images of a plurality of frames can be referred to as a reference image to be referred to in each of the P frames.

A sixteenth technical means is the image decoding device as defined in the fifteenth technical means, wherein when any of the decoded images of the plurality of frames is referred to, it is possible to refer to different decoded images in any unit of a slice unit, a macroblock unit, or a block unit in the respective P frames to be decoded as the reference images, the frame numbers showing the reference images of each unit is obtained referring to the header information of the coded bitstream, and the images of corresponding units in the respective frames are decoded using the decoded images of the obtained frame number.

A seventeenth technical means is the image decoding device as defined in the fifteenth or sixteenth technical means, wherein when the P frames of the coded bitstream coded according to the set speed previously designated for the high speed reproduction are decoded, the decoded images of a plurality of frames, which can be referred to in each of the P frames as the reference image, include at least the images of the frame numbers at the every frame intervals located nearest to the P frames to be decoded out of the images of the frame numbers at the every frame intervals set according to the set speed.

An eighteenth technical means is an image coding program for carrying out the function of an image coding device for coding images only by means of intra-coding and one-direction prediction coding by a computer as a program, wherein the image coding program carries out the function of the image coding device as defined in any one of the first to tenth technical means.

A nineteenth technical means is an image decoding program for carrying out the function of an image decoding device for decoding a bitstream coded only by means of intra-coding and one-direction prediction coding by a computer as a program, wherein the image decoding program carries out the function of the image decoding device as defined in any one of the eleventh to seventeenth technical means.

### EFFECT OF THE INVENTION

According to the present invention composed of the above technical means, a bitstream capable of being reproduced at a high speed can be coded without deterioration of image quality and increase of processing amount by designating the restricted image of the coded ones of each P frame as the reference image and executing prediction coding using the designated reference image in coding images, even if a bitstream is composed only of I and P frames.

Further, in decoding of an image, even the bitstream composed only of the I and P frames can be reproduced at a high speed without deterioration of image quality and increase of processing amount by inputting the P frame that is prediction coded using the restricted image of the coded ones as the reference image together with the reference image.

### BRIEF DESCRIPTION OF THE DRAWINGS

[Fig. 1] Fig. 1 is a block diagram showing a structure of an embodiment of an image coding device according to the present invention.
[Fig. 2] Fig. 2 is a block diagram showing a structure of an embodiment of an image decoding device according to the present invention.
[Fig. 3] Fig. 3 is a schematic view showing an embodiment of an inter-frame prediction structure when a bitstream for double-speed reproduction is created and decoded as the embodiment 1 of the image coding device and the image decoding device according to the present invention.
[Fig. 4] Fig. 4 is a schematic view showing an embodiment of the inter-frame prediction structure when a bitstream for quadruple-speed reproduction is created and decoded as the embodiment 1 of the image coding device and the image decoding device according to the present invention.
[Fig. 5] Fig. 5 is a schematic view showing an embodiment of the inter-frame prediction structure when a bitstream for quadruple-speed reproduction is reproduced at variable speed as the embodiment 1 of the image coding device and the image decoding device according to the present invention.
[Fig. 6] Fig. 6 is a schematic view showing a different embodiment of the inter-frame prediction structure when a bitstream for quadruple-speed reproduction is reproduced at variable speed as the embodiment 1 of the image coding device and the image decoding device according to the present invention.
[Fig. 7] Fig. 7 is a schematic view showing an embodiment of the inter-frame prediction structure when a bitstream for quadruple-speed reproduction is reproduced at variable speed as an embodiment 2 of the image coding device and the image decoding device according to the present invention.
[Fig. 8] Fig. 8 is a schematic view showing an embodiment of the inter-frame prediction structure when a bitstream for quadruple-speed reproduction is reproduced at quadruple-speed as an embodiment 3 of the image coding device and the image decoding device according to the present invention.
[Fig. 9] Fig. 9 is a schematic view showing a different embodiment of the inter-frame prediction structure when a bitstream for quadruple-speed reproduction is reproduced at quadruple-speed as the embodiment 3 of the image coding device and the image decoding device according to the present invention.
[Fig. 10] Fig. 10 is a flowchart for explaining an embodiment of a processing procedure in the image coding device according to the present invention.
[Fig. 11] Fig. 11 is a flowchart for explaining an embodiment of a processing procedure in the image decoding device according to the present invention.
[Fig. 12] Fig. 12 is a flowchart for explaining a different embodiment of the processing procedure in the image coding device according to the present invention.
[Fig. 13] Fig. 13 is a flowchart for explaining a different embodiment of the processing procedure in the image decoding device according to the present invention.
[Fig. 14] Fig. 14 is a schematic view for explaining high speed reproducing operation in a conventional art.

### EXPLANATION OF REFERENCE NUMERALS

100 ... image coding device, 101 ... block division unit, 102 ... subtracting unit, 103 ... orthogonal transformation unit, 104 ... quantization unit, 105 ... variable length coding unit, 106, 202 ... inverse quantization unit, 107, 203 ... inverse orthogonal transformation unit, 108, 204 ... adding unit, 109, 205 ... frame memory, 110, 206 ... motion compensation unit, 111 ... motion detection unit, 112, 207 ... control unit, 200 ... image decoding device, 201 ... variable length decoding unit.

### PREFERRED EMBODIMENTS OF THE INVENTION

Embodiments of an embodiment of an image coding device, an image decoding device, an image coding program, and an image decoding program according to the present invention will be explained below on referring to the drawings.

### [Embodiment 1]

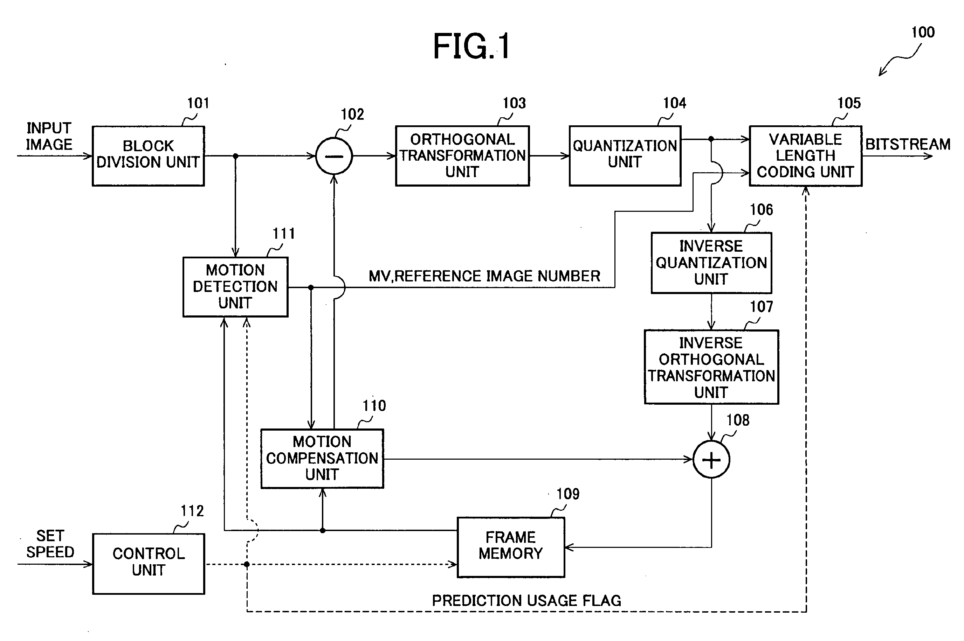

First, an embodiment 1 as a first embodiment of an image coding device, an image decoding device, an image coding program, and an image decoding program according to the present invention is explained. Note that the image coding program and the image decoding program according to the present invention carry out the functions of the image coding device and the image decoding device, which are explained below in detail, as programs of a computer. Fig. 1 is a block diagram showing a structure of the embodiment 1 of the image coding device according to the present invention. In the image coding device 100 shown in Fig. 1, reference numeral 101 denotes a block division unit for dividing an input image into blocks, 102 denotes a subtracting unit for calculating an amount of difference between a block of a present input image and a predicted image corresponding to the block, 103 denotes an orthogonal transformation unit for orthogonal converting the amount of difference calculated by the subtracting unit 102, 104 denotes a quantization unit for quantizing a conversion coefficient from the orthogonal transformation unit 103, 105 denotes a variable length coding unit for variable length coding the quantization coefficient from the quantization unit 104, and the quantization coefficient is output from the image coding device 100 to the outside as a coded bitstream.

Further, reference numeral 106 denotes an inverse quantization unit for inverse quantizing the quantization coefficient from the quantization unit 104, 107 denotes an inverse orthogonal transformation unit for creating an amount of difference of respective blocks by inverse orthogonal transforming the inverse quantized conversion coefficient output from the inverse quantization unit 106, 108 denotes an adding unit for creating a decoded image by adding the amounts of difference of the respective blocks, which are inverse orthogonal transformed and output from the inverse quantization unit 107 to predicted images, 109 denotes a frame memory for storing the decoded image supplied from the adding unit 108, 110 denotes a motion compensation unit for creating a predicted image from the decoded image stored in the frame memory 109, 111 denotes a motion detection unit for detecting a motion between two images by comparing the respective blocks of a present image output from the block division unit 101 with the respective blocks of the decoded image from the frame memory 109, 112 denotes a control unit for controlling the decoded image for the motion detection unit, for controlling the decoded images that are stored in the frame memory and the contents of the bitstream output from the variable length coding unit 105 to the outside (that is, control of coding for the high speed reproduction) in order to create a bitstream for the high speed reproduction according to a set speed for high speed reproduction previously instructed from a user.

Note that a memory, which can store a plurality of frames of the decoded image, is provided in the frame memory 109 of the image coding device 100 shown in Fig. 1 to realize the image coding device according to the present invention, and thereby it is possible to select which of the decoded images stored in the frame memory 109 as a coded image for the motion detection unit 111 under the control from the control unit 112.

Further, it is arranged that a prediction usage flag (that is, the first data acting as prediction usage information) used for prediction coding of other subsequent frames and a reference image number showing the frame number of the decoded image used in the motion detection unit (that is, second data acting as reference information) is added to the bitstream output from the variable length coding unit 105 to the outside under the control of the control unit 112, that is, under the prediction usage information coding control and the reference information coding control.

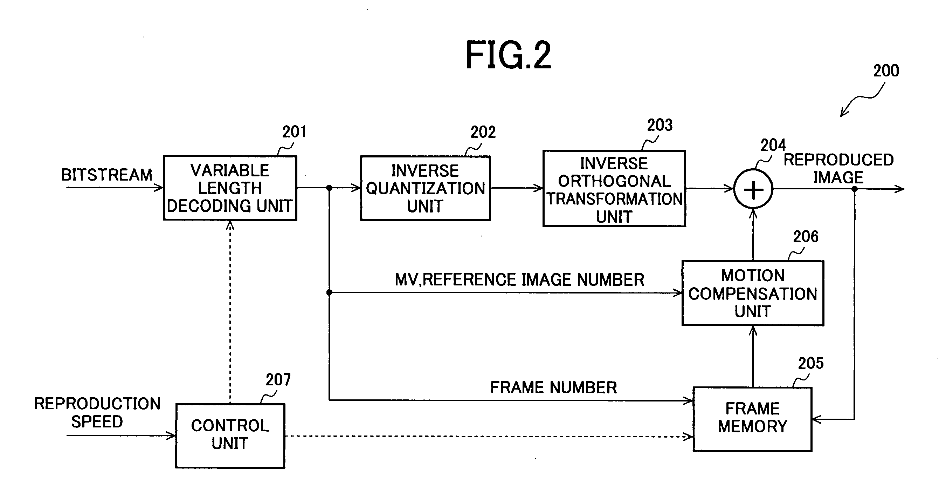

Fig. 2 is a block diagram showing a structure of the embodiment 1 of the image decoding device according to the present invention, wherein a reproduced image is output by decoding the bitstream from the image decoding device 100 shown in Fig. 1. In the image decoding device 200 shown in Fig. 2, reference numeral 201 denotes a variable length decoding unit for length-variably decoding an input bitstream, 202 denotes an inverse quantization unit for inverse quantizing a quantization coefficient after it is length-variably decoded, 203 denotes an inverse orthogonal transformation unit for inverse orthogonal transforming an inverse quantized transformation coefficient output from the inverse quantization unit 202 and creating the values of difference of respective blocks, and 204 denotes an adding unit for creating a decoded image, namely a reproduced image, by adding the values of difference of the respective blocks output from the inverse orthogonal transformation unit 203 to a predicted image and outputting the reproduced image to an external display unit (not shown).

Further, reference numeral 205 denotes a frame memory for storing the decoded image output from the adding unit 204, 206 denotes a motion compensation unit for creating the predicted image from the decoded image stored in the frame memory 205, and 207 denotes a control unit for carrying out skip control of the bitstream to the variable length decoding unit 201, control of the decoded image stored in the frame memory 205, and control of an image displayed on a display unit not shown (or a high speed reproduction decode control) to carry out high speed reproduction according to a reproduction speed previously instructed from a user.

Note that a memory, which can store a plurality of frames of the decoded image, is provided in the frame memory 205 of the image decoding device 200 shown in Fig. 2 to realize the image decoding device according to the present invention, and thereby it is possible to select which of the decoded images, stored in the frame memory 205 as a decoded image for the motion compensation unit 206, out of a plurality of decoded images stored in the frame memory 205 under the control from the control unit 207.

Further, the information output from the variable length decoding unit 201 includes a prediction usage flag and a reference image number in addition to the variable-length decoded quantization coefficient that is input to the inverse quantization unit 202. The control unit 207 carries out a control for outputting the image of a frame number, which is obtained by decoding the prediction usage flag included in the bitstream (or a first data acting as prediction usage information showing whether or not the image is an image used as a reference image by other subsequent frames) to the frame memory 205 as a reference image and decoding the reference image number (or a second data acting as reference information) included in a bitstream and outputting it to the motion compensation unit 206 as the information that shows a decoded image to be used as a reference image in the decoded images stored in the frame memory 205 (or the prediction usage information decoding control and reference information decoding control).

Note that, in the image coding device and the image decoding device according to the present invention, the speed previously designated by a user for a high speed reproduction may be different between an instruction to the control unit 112 of the image decoding device 100 shown in Fig. 1 (in the following explanation, referred to as a "set speed") and an instruction to the control unit of 207 of the image decoding device 200 shown in Fig. 2 (in the following explanation, referred to as a "reproduction speed"). For embodiment, it may be instructed to create a bitstream for a quadruple-speed reproduction in coding and for a double-speed reproduction in reproduction.

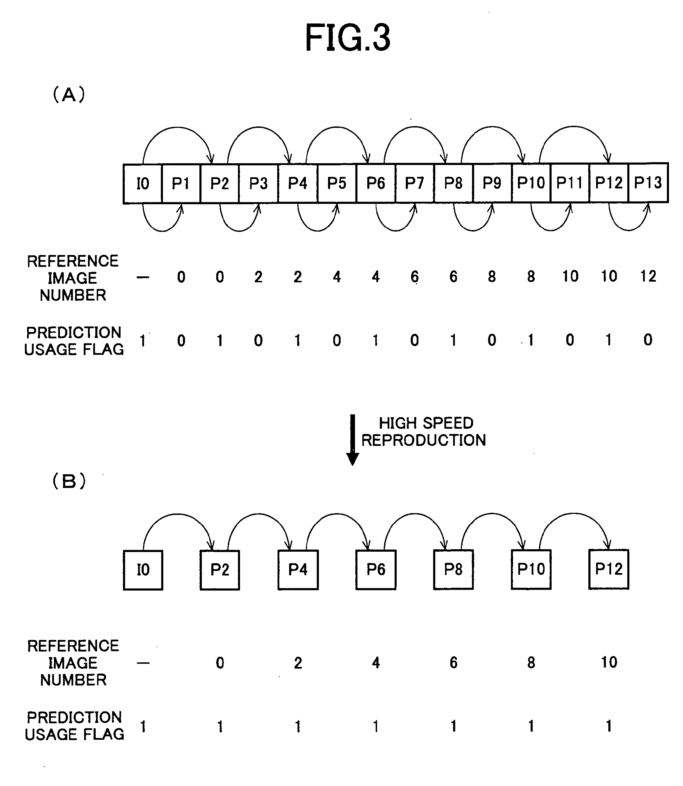

Fig. 3 is a schematic view showing an example of an inter-frame prediction structure when a bitstream for double-speed reproduction is created and decoded as the embodiment 1 of the image coding device and the image decoding device according to the present invention and shows examples of an inter-frame prediction structure of a bitstream created using the image coding device 100 shown in Fig. 1 and an inter-frame prediction structure of a decoded image decoded using the image decoding device 200 shown in Fig. 2. Fig. 3(A) shows a state of the bitstream for double-speed reproduction created by the image coding device 100, and Fig. 3(B) shows a state which the bitstream shown in Fig. 3(A) is reproduced at a double-speed and decoded on the image decoding device 200 side. In Fig. 3, symbols I, P show an I frame coded only by intra-coding and a P frame coded by the intra-coding and one direction prediction coding, respectively, and a B frame coded by bidirection prediction coding is not included. Further, a numeral affixed to the symbol I or P shows a frame number of an object image. The expression as described above is the same in the drawings and the explanation of the following exmaples.

Further, in the drawings and the explanation of the following embodiments, frame numbers are counted assuming that the I frame is a frame 0. Accordingly, when, for example, the I frames periodically appear every 15 frames, frame numbers are reset each time the I frame appears and set to the frame 0 which is incremented one by one until a next I frame appears as long as P frames continue.

In a conventional image coding device for an image composed of only two types of frames, I frame and P frame, the P frame uses only an image just before one frame as a reference image. However, in the image coding device according to the present invention, a reference image for the P frame can be optionally chosen not only from an image just before one frame but also from the already coded images of the I and P frames. Accordingly, the frame number of an image referred to by the P frame is coded as a "reference image number" (reference information) and further a flag, which shows whether or not a preset frame is hereinafter referred to as a reference image (that is, which shows whether or not the frame is used as a reference image from other subsequent frames) is coded as an "prediction usage flag" (prediction usage information). The "reference image number" and the "prediction usage flag" are added and inserted into a bitstream.

The two data, the "reference image number" and the "prediction usage flag" are inserted into the bitstream in the image coding device 100 shown in Fig. 1. Accordingly, in the variable length decoding unit 201 on the image decoding device 200 side shown in Fig. 2, it can be determined that whether or not the decoded image of the present frame created by decoding an input bitstream must be stored in the frame memory 205 by decoding the input bitstream and referring to the "prediction usage flag", and it can be determined that which frame must be referred to for prediction decoding the present frame on referring to the "reference image number".

Note that, in the explanation described above, the frame number of an image to be referred to for every frame is added and inserted into the bitstream as the "reference image number". In image coding device according to the present invention, however, a unit for referring to the reference image may be each slice (packet), each macroblock (MB), or each block, not each frame and the frame number of a reference image may be written to each slice (packet) header, MB header, or block header portion. Further, an amount of difference between the frame numbers of the present image and the reference image, the time information of the reference image, and the like may be used in place of the frame number of the image to be referred to.

Fig. 3(A) shows an example in which coding is carried out using only the 2f(f=0,1,2, ...) - t h images which have already coded of which frame numbers L are multiples of 2 as reference images. That is, the frames P1 and P2 are prediction coded using the frame I0 as a reference image, the frames P3 and P4 are prediction coded using the frame P2 as a reference image, the frames P5 and P6 are prediction coded using the frame P4 as a reference image, and thereafter the reference image moves for every two frame in the same manner. Accordingly, the "reference image number" of the frames P1, P2 is 0, the "reference image number" of the frames P3, P4 is 2, and the "reference image number" of the frames P5, P6 is 4, and this is the same in any of subsequent frames. Further, the "prediction usage flag" of the images of the frames 10, P2, P4, ... and the images of the frames having the frame number L of 2f are set to "1" which shows the reference images, and the "prediction usage flag" of the images of the frames P1, P3, P5, ... and the images of the frames having the frame number L of (2f+1) remain "0" which shows that the images are not the reference images.

As described above, since the images having the frame number L of (2f+1) are not used as the reference image, when the images need not be displayed on the image decoding device 200 side in high speed reproduction, they need not be decoded. That is, in ordinary reproduction, the images of all the frames are decoded and displayed on the image decoding device 200 side. However, in double-speed reproduction, the images having the frame number L of (2f+1) are not subjected to any processing, and only the images having the frame number L of 2f are decoded and displayed. As a result, there can be created a bitstream having such a feature that an amount of processing can be reduced as well as the image quality of an image reproduced at a high speed is not deteriorated as compared with an ordinarily reproduced image in high speed reproduction of the image decoding device 200.

Here, operation of the image coding device 100 when the bitstream shown in Fig. 3(A) is created will be explained using Fig. 1. When the user previously instructs to create a bitstream to be reproduced at a double-speed as a set speed, the control unit 112 notifies the frame memory 109 to store only the images having the frame number L of 2f. Further, the control unit 112 instructs the variable length coding unit 105 to set the "prediction usage flag", which shows whether or not the present frame is used as the reference image when a subsequent frame is coded, to "1" for the 2f-th images and to "0" for the (2f+1)-th images.

At the same time, the control unit 112 instructs the motion detection unit 111 to notify to read out the image having the frame number which is used by the present frame (or slice, MB or block) as a reference image from the frame memory 109 and to detect the motion thereof and instructs the variable length coding unit 105 to code the frame number, that is, the "reference image number" which is used by the present frame (or slice, MB or block) as the reference image. In response to the notification from the control unit 112, the images having the frame numbers L of (2f+1) are prediction coded using the already coded images having the frame numbers L of 2f and located right in front of them as reference images, and the images having the 2f-th frame number are prediction coded using the already coded images having the frame numbers L of 2f and located two frames before it as reference images.

That is, the P frames, which have the 2f-th frame number, are located at every two frame intervals and set for high speed reproduction according to the set speed previously instructed from the user, and the remaining P frames, which have the (2f+1) th frame number and are not set for the high speed reproduction are coded, respectively, the already coded images having the 2f-th frame number located at the every two frame intervals and set for the high speed reproduction are stored to the frame memory 109 as well as the "prediction usages flag" thereof are set to "1" to show that they are the reference images which are referred to by other subsequent frames. Further, in the embodiment 1, a "reference image number" is set such that the P frames, which have the frame number 2f and located at the every two frame intervals and set for the high speed reproduction according to the set speed previously instructed from the user, and the remaining P frames, which have the (2f+1)-th frame number and are not set for the high speed reproduction, are prediction coded using images having the same frame number, that is, the images of the 2f-th frames as the reference images to be referred to thereby.

Thus, as described above, Fig. 3(A), the 2f-th frames shown by 10, P2, P4, P6, ... are used as the reference images. Accordingly, the "reference image number" of the frames P1, P2 is set to a frame number 0 (I0), the "reference image number" of the frames P3, P4 is set to a frame number 2 (P2), and the "reference image number" of the frames P5, P6 is set to a frame number 4 (P4), ....

In contrast, the "prediction usage flag" of the I0, P2, P4, P6, ... having the frame number L of 2f is set "1", and the "prediction usage flag" of P1, P3, P5, P7, ... having the frame number L of (2f+1) is set to "0". It is meant here that the frames whose "prediction usage flag" is set to "1" are used as the reference images and the frames whose "prediction usage flag" is set to "0" are not used as the reference images.

In other words, the reference images whose "prediction usage flags" are set to "1" are disposed only to periodical positions so that the images at every N frames (N: an integer of 2 or more) using the I frames as base points and including the images of the I frames are used as the reference images. In the case of Fig. 3, the value of N (frame intervals) is set to the same value (N=2) as that of frame intervals set by the set value for the high speed reproduction.

Next, operation of the image decoding device 200 when the bitstream as shown in Fig. 3 (A) is decoded is explained using Fig. 2. When the user instructs to carry out reproduction of a bitstream at a double-speed previously instructed as the set speed, the control unit 207 notifies the variable length decoding unit 201 to skip the frame of an input bitstream to the image header of a next frame when the "prediction usage flag" of the frame is set to "0". Then, the control unit 207 notifies the frame memory 205 to store the images of the frames whose "prediction usage flag" is set to "1".

That is, as shown in Fig. 3(B), the variable length decoding unit 201 decodes and displays the frame I0, skips the frame P, and thereafter decodes and displays only the frames P2, P4, P6, ... having the 2f-th frame number in the same manner. At the time, since the reference images of the frames P2, P4, P6, ... are the images of the frames 10, P2, P4, ... stored in the frame memory 205, respectively, it is possible to normally decode the frame P2, P4, P6, ... having the frame number L of 2f regardless that processing for skipping the frames P1, P3, P5, ... having the frame number L of (2f+1) is carried out.

In other words, frames whose "prediction usage flag" is set to "1" is used certainly to show that the frame number, which shows a reference image as the "reference image number" is a reference image referred to from other subsequent frames. Accordingly, when a reference image is periodically disposed at every N frames (N: an integer of 2 or more) in coding, the "prediction usage flag" is also set to "1" periodically likewise. Thus, the P frames can be prediction decoded using a more reliable reference image by confirming that the "prediction usage flag" is set to "1" every N frames. In Fig. 3(B), the value of N (frame interval) is set to the same value (N=2) as that of the frame interval of a set speed when the P frames are coded for high speed reproduction.

Further, since the "prediction usage flag" of the frames 10, P2, P4, P6, ... is set to "1", after decoding, the respective decoded images thereof are stored to the frame memory 205 and used as the reference images of subsequent frames. As described above, since decode processing is reduced to about one half of an ordinary reproduction processing, it is possible to carry out double-speed reproduction without an increase of an amount of processing and deterioration of image quality.

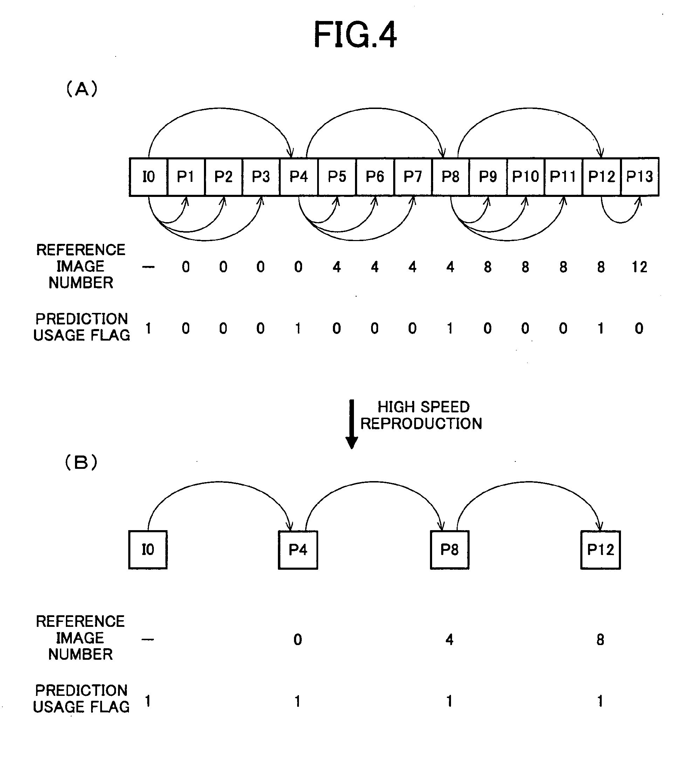

Next, a case of quadruple-speed reproduction is explained using Fig. 4 as an example of another coding and decoding. Fig. 4 is a schematic view showing an example of an inter-frame prediction structure when a bitstream for quadruple-speed reproduction is created as the embodiment 1 of the image coding device and the image decoding device according to the present invention. Fig. 4 shows an example of the inter-frame prediction structure of a bitstream created using the image coding device 100 shown in Fig. 1 and an example of the inter-frame prediction structure of a decoded image decoded using the image decoding device 200 shown in Fig. 2. Fig. 4 (A) shows a state of creation of the bitstream for the quadruple-speed reproduction created by the image coding device 100, and Fig. 4(B) shows a state in which the bitstream created by Fig. 4(A) is reproduced at quadruple-speed reproduction by the image decoding unit 200.

Fig. 4(A) shows an embodiment in which coding is carried out using only the already coded images having the frame number L of 4f (f=0,1,2, ...) as reference images. That is, frames P1, P2, P3, P4 are prediction coded together using a frame I0 as a reference image, frames P5, P6, P7, P8 are prediction coded together using the frame P4 as a reference image, and frames P9, P10, P11, P12 are prediction coded together using the frame P8 as a reference image, and thereafter the reference image sequentially moves by 4 frames in the same manner.

Accordingly, the "reference image numbers" of the frames P1, P2, P3, P4 are 0 together, the "reference image numbers" of the frames P5, P6, P7, P8 are 4 together, and the "reference image numbers" of the frames P9, P10, P11, P12 are 8 together, and this is the same in subsequent frames. Further, the "prediction usage flags" of the images of the frames 10, P4, P8, ... and the images of the frames having the frame number L of 4f are set to "1" which shows the reference image, and the "prediction usage flags" of the images of the frames P1, P2, P3, P5, P6, P7, P9, P10, P11, ... and the images of the frames having frame numbers L other than 4f remain "0" which shows that the images are not the reference images.

As described above, since the images whose frame numbers L are other than 4f are not used as the reference images, when the images need not be displayed on the image decoding device 200 side in high speed reproduction, they need not be decoded. That is, in ordinary reproduction, although the images of all the frames are decoded and displayed on the image decoding device 200 side, in the quadruple-speed reproduction, the images having the frame numbers other than 4f are not subjected to any processing and only the images having the frame number L of 4f are decoded and displayed. As a result, it is possible to create a bitstream having such a feature that when the image decoding device 200 carries out high speed reproduction, an amount of processing is reduced as well as the image quality of a high speed reproduction image is not deteriorated as compared with an ordinarily reproduced image.

Here, operation of the image coding device 10 when the bitstream shown in Fig. 4 (A) is created is explained using Fig. 1. When the user instructs to create a bitstream for quadruple-speed reproduction as the set speed, the control unit 112 instructs the frame memory 109 to store only the images having frame number L of 4f. Further, the control unit 112 instructs the variable length coding unit 105 to set "1" to the "prediction usage flags" of the images having image number L of 4f and "0" to the "prediction usage flags" of the images having frame numbers L other than 4f so that the "prediction usage flags" show whether or not a present frame is used as a reference image when the subsequent frame is coded.

At the same time, the control unit 112 instructs the motion detection unit 111 to read the image having the frame number which is used by the present frame (or slice, MB or block) as a reference image from the frame memory 109 and to detect the motion thereof and instructs the variable length coding unit 105 to code the frame number, that is, the reference image number which is used by the present frame (or slice, MB or block) as the reference image. In response the notification from the control unit 112, the images having frame numbers L other than 4f are prediction coded using the already coded images having the frame number L of 4f and located right in front of them as reference images, and the images having the frame number L of 4f are prediction coded using the already coded images having the frame number L of 4(f-1) and located four frames before them as reference images.

Thus, as described above, in Fig. 4(A), the 4f-th frames shown by I0, P4, P8, ... are used as the reference images. Accordingly, the "reference image numbers" of the frames P1, P2, P3, P4 are set to a frame number 0 (I0), the "reference image numbers" of the frames P5, P6, P7, P8 are set to a frame number 4 (P4), and the "reference image numbers" of the frames P9, P10, P11, P12 are set to a frame number 8 (P8), .... In contrast, the "prediction usage flags" of the I0, P4, P8, ... having the frame number L of 4f are set to "1", and the "reference image numbers" of the P1, P2, P3, P5, P6, P7, ... having the frame numbers other than 4f are set to "0". It is meant here that the frames whose "prediction usage flag" is set to "1" are used as the reference images and the frames whose "prediction usage flags" are set to "0" are not used as the reference images.

Next, operation of the image decoding device 200 when a bitstream as shown in Fig. 4 (A) is decoded is explained using Fig. 2. When the user instructs to carry out reproduction of a bitstream at quadruple-speed, the control unit 207 instructs the variable length decoding unit 201 to skip the frame of an input bitstream to the image header of a next frame when the "prediction usage flag" of the frame is set to "0". Then, the control unit 207 instructs the frame memory 205 to store the image of a frame whose "prediction usage flag" is set to "1".

That is, as shown in Fig. 4(B), the variable length decoding unit 201 decodes and displays the frame 10, skips the frames P1, P2, P3, and thereafter decodes and displays only the frames P4, P8, P12, ... having the frame number L of 4f(f=0,1,2, ...) in the same manner. At the time, since the reference images of the frames P4, P8, P12, ... are the images of the frames 10, P4, P8, ... stored to the frame memory 205, respectively, it is possible to normally decode the frames P4, P8, P12, ... having the frame number L of 4f regardless that processing for skipping the frames P1, P2, P3, P5, P6, P7, P9, P10, P11 ... having the frame numbers other than 4f.

At the same time, since the frames 10, P4, P8, P12, ... have the "prediction usage flags" set to "1", the decoded images of them are stored to the frame memory 205 after they are decoded and used as the reference images of subsequent frames. As described above, since the decode processing can be reduced to about one fourth of normal reproduction processing, it is possible to carry out the quadruple-speed reproduction without an increase of an amount of processing and deterioration of image quality.

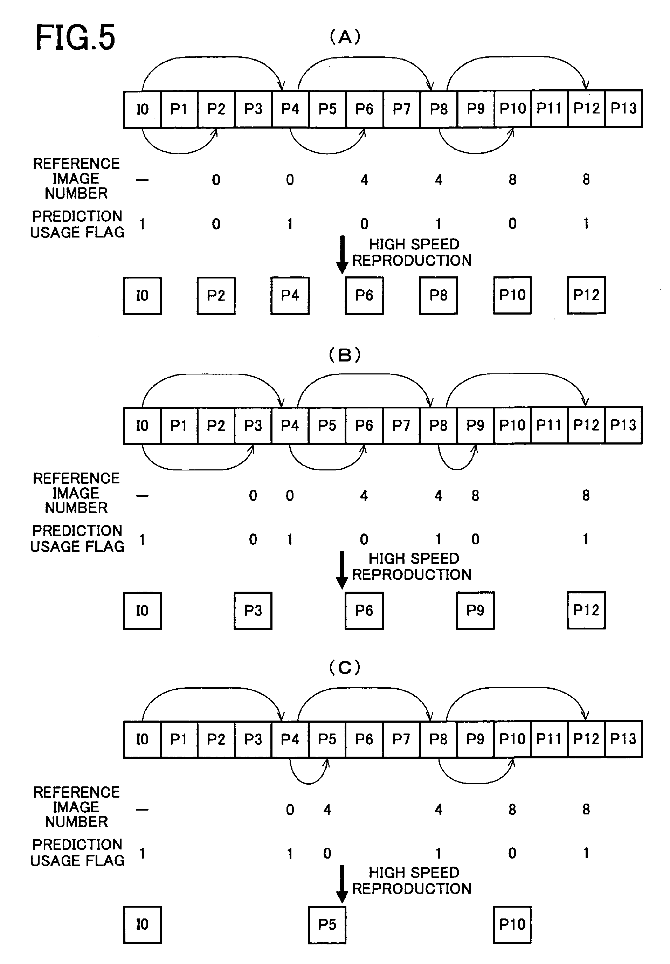

Note that, although the case, in which the bitstream for the quadruple-speed reproduction is created and decoded at the same quadruple-speed, is explained in the embodiment shown in Fig. 4, the present invention is not limited to the case as described above. Even if the bitstream is created referring only to the images having the frame number L of 4f so that it is reproduced at, for example, the quadruple-speed, it can be also reproduced at a speed different from the quadruple-speed. That is, in the present invention, it is also possible to subject the bitstream coded at, for example, the quadruple-speed to variable speed reproduction other than the quadruple-speed as shown in Fig. 5.

Fig. 5 is a schematic view showing an embodiment of an inter-frame prediction structure when a bitstream for quadruple-speed reproduction is subjected to variable speed reproduction as the embodiment 1 of the image coding device and the image decoding device according to the present invention and explains operation when the bitstream for the variable speed reproduction coded at quadruple-speed as an example is reproduced at a variable speed (double-speed, triple-speed, penta-speed). More specifically, explanation is made as to a case in which the set speed instructed by the user as a speed for high speed reproduction when coding is carried out in the image coding device 100 is different from the reproduction speed instructed by the user when the coded bitstream is decoded in the image decoding device 200.

A bitstream for the variable speed reproduction, which is coded at quadruple-speed for the variable speed reproduction using the image coding device 100 shown in Fig. 1, is coded also in Fig. 5 in the same manner as Fig. 4 including the "reference image number" and the "prediction usage flag". That is, the bitstream uses the images of the frame numbers at the respective intervals that are the same as the frame intervals set by the set speed from the user as reference images, the frames 10, P4, P8, ... having the frame number L of 4f(f=0,1,2, ...) are set as the "reference image number", and further only the frames 10, P4, P8, ... having the frame number L of 4f are set to "1" as the "prediction usage flag".

That is, in the variable speed reproduction of the present invention, the image code processing in the image coding device 100 shown in Fig. 1 is arranged as coding operation entirely similar to a case in which a bitstream for the same speed reproduction is created, and the bitstream is decoded by variably changing the image decode processing in the image decoding device 200 shown in Fig. 2 according to a designated variable speed. For embodiment, an embodiment of the variable speed reproduction shown in Fig. 5(A) shows a case in which a bitstream coded at quadruple-speed for high speed reproduction as the set speed is decoded and reproduced at a double-speed as a reproduction speed, an embodiment of the variable speed reproduction shown in Fig. 5(B) shows a case in which a bitstream coded at quadruple-speed for high speed reproduction is decoded and reproduced at triple-speed, and an example of the variable speed reproduction shown in Fig. 5(C) shows a case in which a bitstream coded at quadruple-speed for high speed reproduction is decoded and reproduced at penta-speed. Operation of these examples for the variable speed reproduction is explained below.

First, in the example of the double-speed reproduction shown in Fig. 5(A), the frames P2, P4 are decoded and displayed using the image of the frame I0 as a reference image, next the frames P6, P8 are decoded and displayed using the image of the frame P4 as a reference image, and thereafter every two frames are subjected to decode and display processing similarly to the case of the double-speed reproduction explained in Fig. 3 by repeating the same processings.

That is, when the control unit 207 of the image decoding device 200 shown in Fig. 2 receives an instruction from the user indicating that a bitstream is reproduced at a double-speed as a reproduction speed, the control unit 207 instructs the variable length decoding unit 201 to decode the images having the frame number L of 2f of an input bitstream is 2f (including the images of the frames whose "prediction usage flag" is set to "1") and to skip to the image header of a next frame without carrying out decoding at a ratio of one frame per two frames. Then, the control unit 207 instructs the frame memory 205 to store the images of the frames whose "prediction usage flag" is set to "1". Here, as shown in the coded bitstream of Fig. 5(A), since it is instructed to create a bitstream for quadruple-speed reproduction as high speed reproduction when coding is carried out in the image coding device 100, the "prediction usage flag" of every frame corresponding to the frame number L of 4f is set to "1" as to the bitstream input to the image decoding device 200.

That is, as shown in Fig. 5(A), in the variable length decoding unit 201, the frame 10 is decoded and displayed, the frame P1 is skipped, and thereafter only the frames P2, P4, P6, P8, ..., having the frame number L of 2f are decoded and displayed in the same manner. At the time, since the reference images of the frames P2, P4, P6, P8, ... are the frames I0, 10, P4, P4, ... stored in the frame memory 205, it is possible to normally decode the frames P2, P4, P6, P8, ... having the frame number L of 2f regardless that processing is carried out to skip the frames P1, P3, P5, P7, ... having the frame number L of (2f+1).

Next, in the embodiment of the triple-speed reproduction shown in Fig. 5(B), the frames P3, P4 are decoded using the frame I0 as a reference image, the frame P3 is displayed, and the frame P4 is stored to the frame memory 205. Next, the frames P6, P8 are decoded using the frame P4 stored in the frame memory 205 as a reference image, the frame P6 is displayed, and the frame P8 is stored in the frame memory 205. Next, the frames P9, P12 are decoded using the frame P8 stored in the frame memory 205 as a reference image, the frames P9, P12 are decoded, and the frame P12 is stored in the frame memory 205. Next, the frames P15, P16 are decoded using the frame P12 stored in the frame memory 205 as a reference image, the frames P15 is displayed, and the frame P16 is stored in the frame memory 205.

Thereafter, every 3f-th frame and every 4f-th frame are decoded by repeating the same processing, the decoded 3f-th frames are displayed, and the decoded 4f-th frames are stored to the frame memory 205, thereby only the frames, which are necessary to reproduction at triple-speed, are subjected to decode and display processing.

That is, when the control unit 207 of the image decoding device 200 shown in Fig. 2 receives an instruction from the user indicating that a bitstream is reproduced at triple-speed as a reproduction speed, the control unit 207 instructs the variable length decoding unit 201 to carry out decoding at a ratio of the 3f-th frame and the 4f-th frame of an input bitstream and to skip to the image headers of the next corresponding 3f-th and 4f-th frames without decoding the other frames. Then, the control unit 207 instructs the frame memory 205 to store the images having the "prediction usage flag" set to "1" and the frame number L of 4f.

That is, in the triple-speed reproduction, since images are displayed at a ratio of one frame per three frames, decode processing can be omitted to not shown images. However, in the variable speed reproduction, since the images of frames whose "prediction usage flag" is set to "1" (in the example of the quadruple-speed bitstream of Fig. 5, the image having the frame number L of 4f) is used as the reference image of the subsequent frames, it is necessary to decode and store it in the frame memory 205. Accordingly, when the control unit 207 receives the instruction for the triple-speed reproduction as variable speed reproduction, it instructs the variable length decoding unit 201 to decode only the images of the frames which have the frame number L of 3f and whose images are to be displayed or the images of the frames whose "prediction usage flag" is set to "1" and which are to be decoded and stored in the frame memory 205 and to skip the other frames. Then, the control unit 207 instructs the frame memory 205 to store the images having the "prediction usage flag" set to "1" and the frame number L of 4f, that is, the frames I0, P4, P8, P12, ....

Accordingly, as shown in Fig. 5(B), in the variable length decoding unit 201, the frames P1, P2, P5, P7, P10, P11, ... which have not the frame number L of 3f or 4f are skipped. In contrast, after the frames I0, P3, P4, P6, P8, P9, P12, ... having the frame number L of 3f or 4f are decoded, the control unit 207 instructs a display unit (not shown) to display only the frames I0, P3, P6, P9, P12, ... corresponding to the 3f-th images out of the images of the decoded frames during a time until decoding of a next frame is completed and notifies the frame memory 205 to store only the frames 10, P4, P8, P12 ... which have the "prediction usage flag" set to "1" and correspond to the 4f-th images out of the images of the decoded frames.

At the time, since the reference images of the frames P3, P4, P6, P8, P9, P12, ... are the frame 10, 10, P4, P4, P8, P8, ... stored in the frame memory 205, respectively, it is possible to normally decode the frames P3, P4, P6, P8, P9, P12, ... having the frame numbers L of 3f and 4f regardless that the frames P1, P2, P5, P7, P10, P11, ... having the frame numbers L other than 3f and 4f are skipped.

Further, in the example of penta-speed reproduction shown in Fig. 5(C), the frame P4 is decoded using the frame I0 as a reference image, after the decoded frame P4 is stored in the frame memory 205, the frames P5, P8 are decoded using the frame P4 stored in the frame memory 205 as a reference image, the frame P5 having the frame number L of 5f is displayed, and the frame P8 having the frame number L of 4f is stored in the frame memory 205. Next, the frames P10, P12 are decoded using the frame P8 stored in the frame memory 205 as a reference image, the frame P10 having the frame number L of 5f is displayed, and the frame P12 having the frame number L of 4f is stored in the frame memory 205.

Thereafter, every 5f frames and 4f frames are decoded by repeating the same processing, the decoded 5f-th frames are displayed, the decoded 4f-th frames are stored in the frame memory 205, and only the frames necessary to the penta-speed reproduction are subjected to decode and display processing.

That is, when the control unit 207 of the image decoding device 200 shown in Fig. 2 receives an instruction from the user indicating that a bitstream is reproduced at penta-speed as a reproduction speed, the control unit 207 instructs the variable length decoding unit 201 to carry out decoding at a ratio of the 5f-th frame and the 4f-th frame of an input bitstream and skips to the image headers of the next corresponding 5f-th and 4f-th frames without decoding the other frames. Then, the control unit 207 instructs the frame memory 205 to store the images having the "prediction usage flag" set to "1" and the frame number L of 4f.

That is, in the penta-speed reproduction, since images are displayed at a ratio of one frame per five frames, decode processing can be omitted to not shown images. However, in the variable speed reproduction, since the images of frames whose "prediction usage flag" is set to "1" (in the example of the quadruple-speed bitstream of Fig. 5, the images having the frame number L of 4f) are used as the reference images of subsequent images, it is necessary to decode and store them in the frame memory 205. Accordingly, when the control unit 207 receives an instruction of penta-speed reproduction as variable speed reproduction, it instructs the variable length decoding unit 201 to decode only the images of the frames which have the frame number L of 5f and whose images are to be displayed or the images of the frames whose "prediction usage flag" is set to "1" and which are to be decoded and stored in the frame memory 205 and to skip the other frames. Then, the control unit 207 instructs the frame memory 205 to store the images having the "prediction usage flag" set to "1" and the frame number L of 4f, that is, the frames I0, P4, P8, P12, ....

Accordingly, as shown in Fig. 5(C), in the variable length decoding unit 201, the frames P1, P2, P3, P6, P7, P9, P11, P13, P14 ... which have not the frame number L of 5f or 4f are skipped. In contrast, after the frames I0, P4, P5, P8, P10, P12, P15 ... having the frame number L of 5f or 4f are decoded, the control unit 207 instructs the display unit (not shown) to display only the frames I0, P5, P10, P15, ... corresponding to the 5f-th images out of the images of the decoded frames during a time until decoding of a next frame is completed and instructs the frame memory 205 to store only the frames 10, P4, P8, P12 ... which have the "prediction usage flag" set to "1" and correspond to the 4f-th images out of the images of the decoded frames.

At the time, since the reference images of the frames P4, P5, P8, P10, P12, P15, ... are the frames I0, P4, P4, P8, P8, P12, ... stored in the frame memory 205, respectively, it is possible to normally decode the frames P4, P5, P8, P10, P12, P15, ... having the frame numbers L of 5f or 4f regardless that the frames P1, P2, P3, P6, P7, P9, P11, P13, P14, ... having the frame numbers L other than 5f and 4f are skipped.

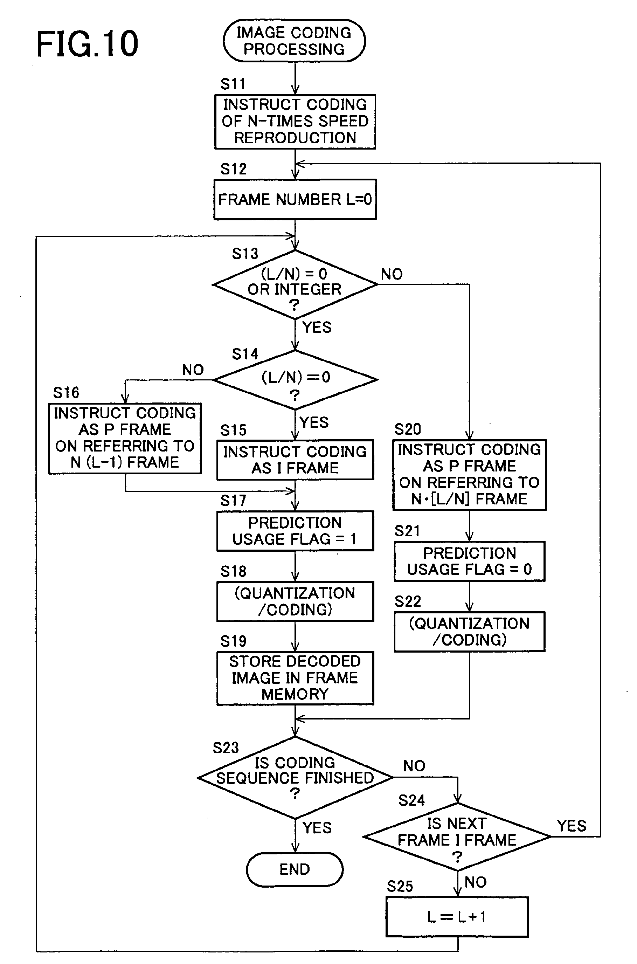

Fig. 10 shows a procedure for carrying out the image code processing described above by the control unit 112 of the image coding device 100 shown in Fig. 1. Fig. 10 is a flowchart for explaining an embodiment of a processing procedure in the image coding device according to the present invention. Note that although processing of (quantization/coding) shown at steps S18, S22 of Fig. 10 is not a processing means to which the control unit 112 directly relates, it is additionally described to show the overall flow of processings.

In an example of the code processing procedure of Fig. 10, when an instruction for creating a bitstream for N-times speed (N: an integer of 2 or more) reproduction as a set speed for high speed reproduction when coding is carried out is input from the user (step S11), first, a variable L for counting the number of frames of an input image is initialized and set to "0" (step S12). The variable for counting the number of the input frames, that is, the frame number L is initialized to "0" each time a frame corresponding to one frame appears.

Next, it is determined whether or not a value (L/N) obtained by dividing the frame number L by a designated speed N is 0 or an integer, that is, whether or not the number of the input frames is 0 or a multiple of N (step S13). When (L/N) is 0 or an integer (step S13: YES), it is determined whether or not (L/N) is 0 (step S14). When (L/N) is 0 (step S14: YES), since the image of the input frame is the image of a frame to be coded as an I frame, the motion detection unit 111 is instructed to clear the contents of the frame memory 109 and to code the frame as the I frame without outputting anything to the variable length coding unit 105 as the "reference image number" (step S15).

In contrast, when (L/N) is not 0 (step S14: NO), since (L/N) is an integer and the input frame is coded as a P frame to be used as a reference image that is referred to from a subsequent frames, the motion detection unit 111 is instructed to prediction code the input frame as a P frame referring to the N(L-1)-th frame, namely the N-th previous frame and to notify the variable length coding unit 105 of N(L-1) as the "reference image number" (step S16).

Thereafter, after it is instructed to the variable length coding unit 105 to set the "prediction usage flag", which shows that the image of the P frame is the reference image that is referred to from the subsequent frames, to "1" (step S17), the present frame having the frame number L is subjected to orthogonal transformation/quantization and output together with the coded "reference image number" and "prediction usage flag" (step S18). Further, it is instructed to store the decoded image after a quantization coefficient is subjected to inverse quantization/inverse orthogonal transformation in the frame memory 109 (step S19)

In contrast, when (L/N) is neither 0 nor an integer (step S13: NO), (L/N) is a non-integer, the input frame is coded as a P frame which is not referred to from the subsequent frames as a reference image. Accordingly, the motion detection unit 111 is instructed to prediction code the input frame as a P frame referring to an {N·[L/N]}-th (here, [x] is an integer obtained by neglecting a decimal portion) frame, namely the frame just before it, which is located at a position of an integer multiple of the designated speed N and to notify the variable length coding unit 105 of {N·[L/N]} as the "reference image number" (step S20).

Thereafter, after it is instructed to the variable length coding unit 105 to set the "prediction usage flag" to "0" to show that the image of the input frame is not a reference image that is referred to from the subsequent frames (step S21), the present frame having the frame number L is subjected to orthogonal transformation/quantization, coded by variable length coding unit 105, and output together with the coded "reference image number" and "prediction usage flag" (step S22). Thereafter, the process goes to step S23. That is, since the present frame having the frame number L is the image of the frame which is not referred to as the reference image different from the case that (L/N) is 0 or an integer, it is not necessary to store the decoded image in the frame memory 109.

Finally, it is determined whether or not coding of all the images to be coded is finished (step S23), and when it is finished (step S23 : YES), the image code processing is finished. In contrast, when the coding is not yet finished (step S23: NO), it is determined whether or not the image of a next frame is the image of a frame to be coded as an I frame (step S24). When the image of the frame is the frame to be coded as the I frame (step S24: YES), the process returns to step S12 to reset the frame number L to "0" so that it is returned to an initial state. In contrast, when the next frame is a frame to be prediction coded as a P frame instead of the I frame (step S24: NO), the frame number L is incremented by 1 (step S25), and the process returns to step S13 to continue prediction coding of the P frame.

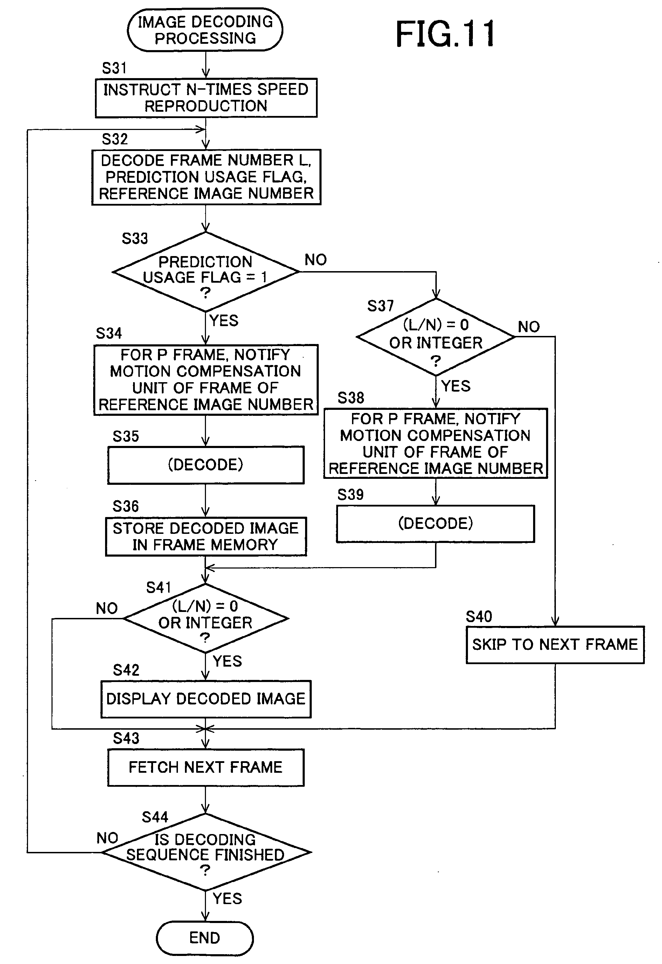

Fig. 11 shows a procedure for carrying out the image decode processing described above by the control unit 207 of the image decoding device 200 shown in Fig. 2. Fig. 11 is a flowchart for explaining an example of a processing procedure in the image decoding device according to the present invention. Note that although (decoding) processing shown at steps S35, S39 of Fig. 11 is not a processing means to which the control unit 207 directly relates, it is additionally described to show the overall flow of processings.

In the exmaple of the decode processing procedure of Fig. 11, when an instruction of reproduction at an N-times speed (N: a positive integer) is input from the user as high speed reproduction when decoding is carried out (step S31), first, a frame number L, the "prediction usage flag", and the "reference image number" are decoded from the present frame in an input bitstream (step S32). Here, the frame number L is set to "0" each time a frame corresponding to an I frame appears. Further, the "prediction reference flag" is set to "1" as to the image of a frame that is referred to by subsequent P frames, and the "reference image number" shows the frame number of an image that is referred to by the P frame.

Next, it is determined whether or not the decoded "prediction usage flag" is set to "1" (step S33), and when the "prediction usage flag" is set to "1" (step S33: YES) and the present frame is the P frame, the frame shown by "reference image number" of the present frame is notified to the motion compensation unit 206 (step S34). Thereafter, a decoded image is created by subjecting the bitstream to inverse quantization/inverse orthogonal transformation (step S35). Thereafter, since the "prediction usage flag" is set to "1", the frame is a frame that is referred to by the subsequent frames as a reference image. Thus, the frame memory 205 is instructed to store the decoded image of the frame (step S36), and the process goes to step S41.

Further, when the "prediction usage flag" is set to "0" (step S33: NO), since the frame is not the frame that is referred to by the subsequent frames as the reference image, it is not necessary to store the decoded image of the present frame in the frame memory 205. Thus, it is determined whether or not the value (L/N) obtained by dividing the frame number L by the designated N-times-speed is 0 or an integer, that is, whether or not the image of the frame corresponds to the image of a frame to be reproduced at the N-times speed (step S37).

When (L/N) is 0 or an integer (step S37: YES), since the image of the frame is the image of the P frame which is to be reproduced at the N-times-speed, the frame shown by the "reference image number" of the present frame is notified to the motion compensation unit 206 (step S38). Thereafter, a decoded image is created by subjecting the bitstream to inverse quantization/ inverse orthogonal transformation (step S39), and then the process goes to step S41. In contrast, when (L/N) is neither 0 nor an integer Step S37: NO), since the image of the frame is not the image of the frame which is to be reproduced at the N-times-speed, the variable length decoding unit 201 is instructed to skip the decode processing to the leading end of a next frame (step S40) and then the process goes to step S43.

At step S41, first, it is determined whether or not (L/N) is 0 or an integer, that is, the image of the frame is the image of a frame which is to be displayed on a screen as a reproduced image for N-times-speed reproduction (step S41). When (L/N) is 0 or an integer, (step S41: YES), a display unit, which is not shown in Fig. 2, instructed to display the decoded image of the present frame thereon (step S42). Thereafter, a next frame is fetched from the bitstream (step S43), and it is determined whether or not a bitstream to be decoded is finished (step S44). When the bitstream is finished (step S44 : YES), the decode processing is ended. However, when the input bitstream still continues (step S44: NO), the process returns to step S32 and continues the decode processing.

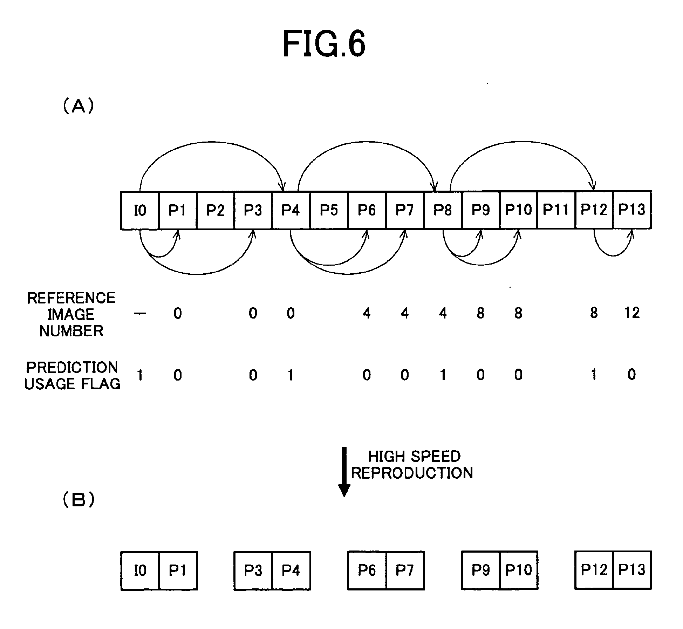

Explained next is a case of reproduction carried out at an arbitrary speed including a fraction type speed having decimals which is different from the above-mentioned reproducing operation carried out at integer times speeds such as the double-speed, quadruple-speed, triple-speed, and penta-speed described above. When a bitstream is coded so as to be reproduced at quadruple-speed described above in the code processing carried out in the image coding device 100 shown in Fig. 1, a case in which one and half times-speed reproduction is carried out in the decode processing in the image decoding device 200 shown in Fig. 2 is explained as an example using Fig. 6. Here, Fig. 6 is a schematic view showing an example having a different inter-frame prediction structure when a bitstream for quadruple-speed reproduction is subjected to variable speed reproduction as the embodiment 1 of the image coding device and the image decoding device according to the present invention and shows a case in which a bitstream for variable speed reproduction that is reproduced at quadruple-speed is reproduced at one and half times-speed as an example of a variable speed reproduction.

Also in Fig. 6, a bitstream for variable speed reproduction, which is coded at quadruple-speed for the variable speed reproduction using the image coding device 100 shown in Fig. 1, is coded likewise the case in Fig. 4 together with a "reference image number" and a "prediction usage flag". Only frames 10, P4, P8, ... having the frame number L of 4f (f=0, 1, 2, ...) are set as the "reference image number", and further only the frames I0, P4, P8, ... having the frame number L of 4f are set to "1" as the "prediction usage flag". That is, in the variable speed reproduction in the present invention, the image code processing in the image coding device 100 shown in Fig. 1 is arranged entirely similarly to the case in which a bitstream for the same speed reproduction is created, and image decode processing in the image decoding device 200 shown in Fig. 2 is variably carried out according a variably designated speed.

In the image decoding device 200, first, in an example of one and half times-speed reproduction shown Fig. 6, frames P1, P3, P4 are decoded using a frame I0 as a reference image, the frames P1, P3, P4 are displayed, and the frame P4 is stored in the frame memory 205. Next, frames P6, P7 are displayed using the frame P4 stored in the frame memory 205 as a reference image, and a frame P8 is stored in the frame memory 205. Next, frames P9, P10, P12 are decoded using the frame P8 stored in the frame memory 205 as a reference image, the frames P9, P10, P12 are displayed, and the frame P12 is stored in the frame memory 205.

Thereafter, the [(3/2)f]-th frames (here, f=0, 1, 2, ... and [x] is an integer obtained by neglecting decimal places) and every 4f-th frames are decoded by repeating the same processing, the decoded [(3/2)f]-th frames are displayed, the decoded 4f-th frames are stored in the frame memory 205, and only the frames necessary to the one and half times-speed reproduction are subjected to decode and display processing.

That is, when the control unit 207 of the image decoding device 200 shown in Fig. 2 receives an instruction from the user indicating to carry out one and half times-speed reproduction of a bitstream as a reproduction speed, the control unit 207 notifies the variable length decoding unit 201 to carry out decoding at a ratio of the [(3/2)f]-th frames and the 4f-th frames of an input bitstream and to skip to the image header of next corresponding frames as the [(3/2)f]-th and 4f-th frames without decoding the other frames. Then, the control unit 207 notifies the frame memory 205 to store the images which have the "prediction usage flag" set to "1" and the frame number L of 4f.

That is, in the one and half times-speed reproduction, since images are displayed at a ratio of two frames per three frames, decode processing can be omitted to the images which are not displayed. However, in the variable speed reproduction, since the images of frames whose "prediction usage flag" is set to "1" (in the example of the bitstream of the quadruple-speed of Fig. 6, the images having the frame number L of 4f) are used as the reference images of subsequent images, it is necessary to decode and store them to the frame memory 205. Accordingly, when the control unit 207 receives the instruction of the one and half times-speed reproduction as variable speed reproduction, it instructs the variable length decoding unit 201 to decode only the images of the frames which have the [(3/2)f]-th frame number L and whose images are to be displayed or only the images of the frames whose "prediction usage flag" is set to "1" and which have the frame number L of 4f and are to be decoded and stored in the frame memory 205 and to carry out skip at a ratio of two frames per three frames. Then, the control unit 207 instructs the frame memory 205 to store the images having the "prediction usage flag" set to "1" and the frame number L of 4f, namely the frames I0, P4, P8, P12, ....

Accordingly, as shown in Fig. 6, the variable length decoding unit 201 skips the frames P2, P5, P11, P14, ... which do not have the frame number L of [(3/2)f] of 4f. In contrast, after the frames 10, P1, P3, P4, P6, P7, P8, P9, P10, P12, P13 ... having the frame number L of [(3/2)f] or 4f are decoded, the control unit 207 instructs the display unit not shown in Fig. 6 to display only the frames 10, P1, P3, P4, P6, P7, P9, P10, P12, P13, ... corresponding to the [(3/2)f]-th images out of the images of the decoded frames during a time until decoding of a next frame is completed and instructs the frame memory 205 to store only the frames I0, P4, P8, P12 ... which have the "prediction usage flag" set to "1" and correspond to the 4f-th image out of the images of the decoded frames.

At the time, since the reference images of the frames P1, P3, P4, P6, P7, P8, P9, P10, P12, P13, ... are the images of the frames I0, I0, I0, P4, P4, P4, P8, P8, P8, P12, ... stored in the frame memory 205, respectively, it is possible to normally decode the frames P1, P3, P4, P6, P7, P8, P9, P10, P12, P13, ... having the frame numbers L of [(3/2)f] or 4f regardless that the frame P2, P5, P11, P14, ... having the frame numbers other than the frame numbers L of [(3/2)f] or 4f are skipped.

In the case of the one and half times-speed reproduction, it is necessary, in the decode processing flowchart shown in Fig. 11, to change the processing at step S37, in which whether the present frame is to be decoded or to be skipped is switched by determining whether or not (L/N) is 0 or an integer and to change the processing at step S41, in which whether the image of present frame is to be displayed or the display thereof is to be skipped is switched by determining whether or not (L/N) is 0 or an integer, respectively and to determine any ones in the range, in which every three frames each having a frame number beginning from 0 are separated, correspond to two frames previously designated. As a result, it is possible to carry out the one and half times-speed reproduction by decoding, for example, first two frames out of the three frames and displaying the images thereof and skipping the next one frame.

In general, when a set speed N instructed for high speed reproduction is expressed by a fraction mode of (a/b), in which "a" shows a numerator and "b" shows a denominator, and an input bitstream is sectioned to respective "b" pieces of frames, an image can be displayed at a high speed of an (a/b) times speed by decoding and displaying only the images of "a" pieces of frames from a first frame in each of the respective "b" pieces of frames. Note that, "a" pieces of frames located at positions arbitrarily selected in each of the "b" pieces of frames may be decoded and displayed in place of decoding and displaying the images of the first "a" pieces frames.

As described above, in the bitstream composed only of the I frames and the P frames in the embodiment 1 of the present invention, the "prediction usage flag", which shows that reference is made by a subsequent frame, and the "reference image number", which designates the frame number of a reference image referred to by a present P frame to be coded, are coded as the code processing of the image coding device 1 shown in Fig. 1. As a result, a bitstream can be created so that it can be reproduced at any high reproduction speed, and the bitstream can be reproduced at any high speed as the decode processing of the image decoding device 200 shown in the Fig. 2.

That is, the set speed designated from the user on the image coding device 100 side means a speed at which the bitstream created on the image coding device 100 side can be most effectively reproduced at a high speed on the image decoding device 200 side. As in the embodiment described above, it is possible to reproduce a bitstream, which is coded for the quadruple-speed reproduction on the image coding device 100, can be reproduced on the image decoding device 200 side at any arbitrary reproduction speed such as double-speed, triple-speed, penta-speed, one and half times-speed, and the like, in addition to the quadruple-speed.

### [Embodiment 2]

Next, an embodiment 2 of the image coding device and the image decoding device according to the present invention different from the embodiment 1 described above is explained. An arrangement of the image coding device and the image decoding device in the embodiment 2 may be the same as the image coding device 100 and the image decoding device 200 shown in Figs. 1 and 2. Explained in the embodiment 2 is an example in which a bitstream, which can be reproduced at high speed, is created on the image coding device 100 side using a plurality of the reference images and reproduced at a high speed on the image decoding device 200 side.

In other words, in the embodiment 2 different from the case of the embodiment 1, a case will be explained in which an image of a different frame number is referred to as a reference image as an image to be referred to out of reference images when P frames having frame numbers set for high speed reproduction at every frame intervals are coded and referred to as an image to be referred to out of the reference images when P frames having the remaining frame numbers which are not set for high speed reproduction are coded according to a set speed from the user in coding.

That is, in the embodiment 1, when P frames are prediction coded in a bitstream composed only of I frames and the P frames, there is also a case in which an image of a distant frame is referred to. In, for example, the example of the quadruple-speed shown in Fig. 4, the frame 10 is separated from the frame P3 by 3 frames. In general, a problem arises that a prediction coding efficiency decreases and image quality deteriorates as the distance from the reference images becomes longer. In the embodiment 2, an already coded image located at a position near to a P frame to be coded can be referred to by permitting the frame memory 109 on the image coding device 100 side and the frame memory 205 on the image decoding device 200 side to store a plurality of frames as reference images, thereby the prediction coding efficiency can be prevented from decreasing.

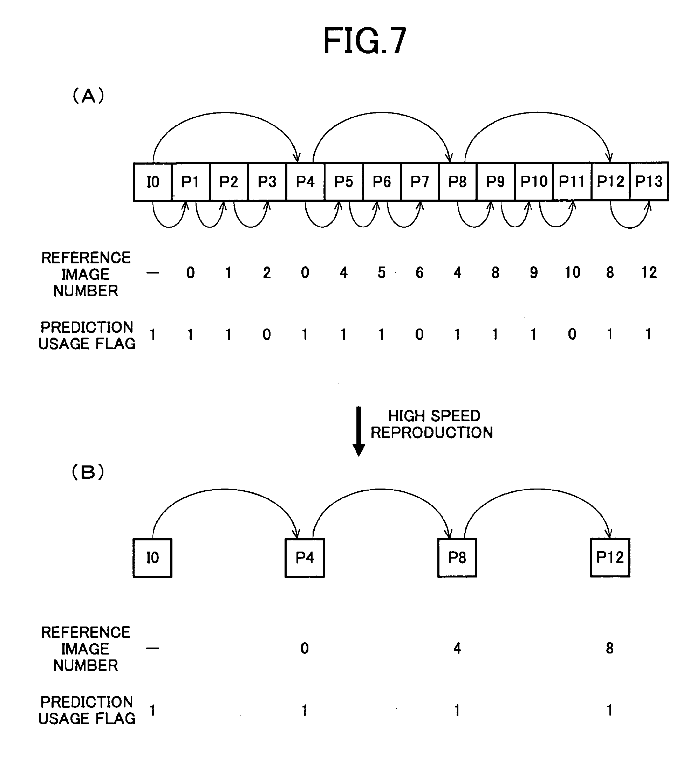

Fig. 7 is a schematic view showing an example of an inter-frame prediction structure when a bitstream for quadruple-speed reproduction is subjected to variable speed reproduction as the embodiment 2 of the image coding device and the image decoding device according to the present invention and shows an example of operation for carrying out prediction coding using an image of a frame which is different in the images every frames, that is, using images of a plurality of frames as reference images. Fig. 7(A) shows how a bitstream for quadruple-speed reproduction is created by the image coding device 100, and Fig. 7(B) shows how the bitstream created in Fig. 7(A) is decoded by being reproduced at quadruple-speed on the image decoding device 200 side.

Fig. 7(A) shows an example in which coding is not carried out using only already coded images having the frame numbers L of 4f(f=0,1,2, ...) as reference images different from Fig. 4 described above as the embodiment 1. For example, frames P2, P3 are prediction coded referring to frames P1, P2 located right in front of them as reference images, respectively in place of a frame 10. That is, the frames P1, P2, P3 are prediction coded using frames 10, P1, P2, just before them respectively, as reference images, and a frame P4 is prediction coded using the frame 10, located 4 frames before it. Further, frames P5, P6, P7 are prediction coded using frames P4, P5, P6, just before them respectively, as reference images and a frame P8 is prediction coded using the frame P4 located 4 frames before it as a reference image.

Thereafter, the reference images sequentially move by 4 frames in the same manner. Accordingly, the "reference image numbers" of the frames P1, P2, P3, P4 are set to 0, 1, 2, 0, the "reference image numbers" of the frames P5, P6, P7, P8 are set to 4, 5, 6, 4, and the "reference image numbers " of the frames P9, P10, P11, P12 are set to 8, 9, 10, 8, and this is the same thereafter. Further, the "prediction usage flags" of the images of the frames I0, P1, P2, P4, P5, P6, P8, P9, P10, ... and the images of the frames having the frame numbers L of 4f, (4f+1), or (4f+2) are set to "1" showing reference images, respectively, and the "prediction usage flags" of the images of the frames P3, P7, P11, ... and the images of the frames having the frame number L of (4f+3) remain "0" showing that the images of these frames are not reference images.

Accordingly, as shown in Fig. 7(A), when the user instructs to create a bitstream for quadruple-speed reproduction as a set speed, the control unit 112 instructs the frame memory 109 to store the images of the frames having the frame numbers L of 4f, (4f+1), or (4f+2). Further, the control unit 207 notifies the variable length coding unit 105 of the prediction usage flags of the images of the 4f-th, (4f+1)-th, and (4f+2)-th frames, which show whether or not the present frame is used as a reference image when a subsequent frame is coded.

At the same time, the control unit 207 instructs the motion detection unit 111 to read the image having the frame number which is used by the present frame (or slice, MB or block) as a reference image from the frame memory 109 and to detect a motion as well as instructs the variable length coding unit 105 to code the frame number, that is, the reference image number which is used by the present frame (or slice, MB or block) as the reference image. In response to the notification from the control unit 112, the images having the frame numbers L of (4f+1), (4f+2), or (4f+3) are prediction coded using the already coded images of frames just before them as reference images, and the image having the frame number L of 4f is prediction coded using the already coded image having the frame number L of 4 (f-1) and located four frames before it.

Next, when a bitstream as shown in Fig. 7(A) is decoded and the image decoding device 200 is instructed from the user to reproduce the bitstream at quadruple-speed as a reproduction speed, the control unit 207 instructs the variable length decoding unit 201 to skip a frame, in which the "prediction usage flag" of an input bitstream is set to "0", to the image header of a next frame. Then, the control unit 207 instructs the frame memory 205 to store the images of the frames whose "prediction usage flag" is set to "1".

That is, as shown in Fig. 7(B), a decode operation is carried out similarly to the case of Fig. 4(B), the variable length decoding unit 201 decodes and displays the frame I0, skips the frames P1, P2, P3, and thereafter decodes and displays only the frames P4, P8, P12, ... having the frame number L of 4f in the same manner. At the time, since the reference images of the frame P4, P8, P12, ... are the images of the frames I0, P4, P8, ... stored in the frame memory 205, respectively, it is possible to normally decode the frame P4, P8, P12, ... having the frame number L of 4f regardless that the frames P1, P2, P3, P5, P6, P7, P9, P10, P11, ... having the frame numbers L other than 4f are skipped. As described above, since the decode processing can be reduced to about one fourth of normal reproduction processing, it is possible to carry out the quadruple-speed reproduction without an increase of an amount of processing and without deterioration of image quality.

As shown in Fig. 7(A), in the image coding device 100, at the stage in which the frame P2 or P3 is coded, the image of the frame I0 acting as a reference image when the subsequent frame P4 is coded and the images of two frames, that is, the images of the frames P1 and P2 used as the reference images when the frame P2 or P3 is coded, respectively, are stored in the frame memory 109. That is, a method of selecting reference images is changed in images for high speed reproduction and in images other than the above images by, for example, selecting an already coded image, which is reproduced at a high speed of quadruple-speed as the image of a frame used certainly for reproduction at quadruple-speed (that is, the image of the frame having the frame number L of 4f) and selecting the already coded image of the frame just before it as the image of the frame other than the above frame (that is, the images of the frames having the frame numbers L other than 4f).

Further, although not shown in Fig. 7(B), when it is instructed to reproduce a bitstream, which is coded for quadruple-speed reproduction, at a high speed of a double-speed, the variable length decoding unit 201 decodes the frames I0, P1, displays the frame I0, and stores the frames I0, P1 in the frame memory 205. Next, the variable length decoding unit 201 decodes and displays the frame P2 referring to the frame P1 stored in the frame memory 205 and skips the frame P3. Next, the variable length decoding unit 201 decodes and displays the frame P4 referring to I0 stored in the frame memory 205 and stores it in the frame memory 205. It is possible to reproduce even the bitstream for quadruple-speed reproduction at a double-speed without deteriorating image quality by carrying out decoding thereafter in the same manner.

That is, the embodiment shown in Fig. 7 shows a case in which the images to be referred to when the P frames having the frame numbers at every frame intervals, to which a set speed N for high speed reproduction is designated, are the images at every N frames (in this embodiment, N=4) using the frames 10 as base point and including the frame 10, whereas, the images to be referred to when the P frames of the remaining frame numbers which are not set for high speed reproduction are images right in front of them. As described above, even in the case in which a coded bitstream is decoded by changing the method of selecting reference images depending on the images for high speed reproduction and the images other than the above images, high speed reproduction can be carried out at any arbitrary speed designated as a reproduction speed without an increase of an amount of processing and without deterioration of image quality.

That is, although the case in which the already coded image referred to by the images of the frames having the frame numbers L other than 4f is set to the frame just before it in the example of Fig. 7(A), the present invention is not limited to the case of referring to the frame just before it and may of course select a reference image out of any already coded images.

Further, when prediction coding is carried out by changing the method of selecting the reference images depending on the images for high speed reproduction, which are certainly used to carry out reproduction at the set speed designated in coding, that is, the images of the frame numbers at every frame intervals set for the high speed reproduction by the set speed and on the images other than the above images, that is, the images of the remaining frame numbers that are not set for the high speed reproduction, there can be employed, as a method of notifying the image decoding device 200 that the image of a frame selected as a reference image is selected by a different selection method, a method of expanding the "prediction usage flag" described above in the embodiment 1, setting the "prediction usage flag" to "2" as to the already coded images for the high speed reproduction which are certainly used by the image coding device 100, setting the "prediction usage flag" to "1" as to the already coded images used for prediction coding other than the above images, setting the "prediction usage flag" to "0" as to the images which are not used for the prediction coding, and notifying them to the image decoding device 200.

When the image coding device 100 receives from the user an instruction for creating a bitstream for quadruple-speed reproduction, the control unit 112 stores the images of the frames having the frame number L of 4f in the frame memory 109 because they are used as reference images for the high speed reproduction of quadruple-speed as well as sets the "prediction usage flag" to "2", and designates 4(f-1) which is a frame number of the frame before four frames as the reference image number of the 4f-th present frame. Further, the control unit 112 stores the images of the frames acting as reference images to the images of the frames which have the frame numbers L other than the 4f and are the images of subsequent frames (in the example shown in Fig. 7(A), the images of the (4f+1)-th and (4f+2)-th frames) in the frame memory 109 as well as sets the "prediction usage flag" to "1", and designates the frame numbers of the already coded images to be referred to (in the example shown in Fig. 7(A), the 4f-th and (4f+1)-th frames located right in front of the (4f+1)-th and (4f+2)-th frames) as the reference image number of the present frame having the frame number L other than 4f.

In contrast, the control unit 112 sets the "prediction usage flag" of the image of the (4f+3)-th frame, which is not referred to as a reference image, to "0" without storing the image in the frame memory 109 and designates the frame number of the already coded image to be referred to (in the example of Fig. 7(A), the frame number, (4f+2) which is the number of the frame located right in front of the (4f+3)-th frame is designated) as the reference image number of the present (4f+3)-th frame.

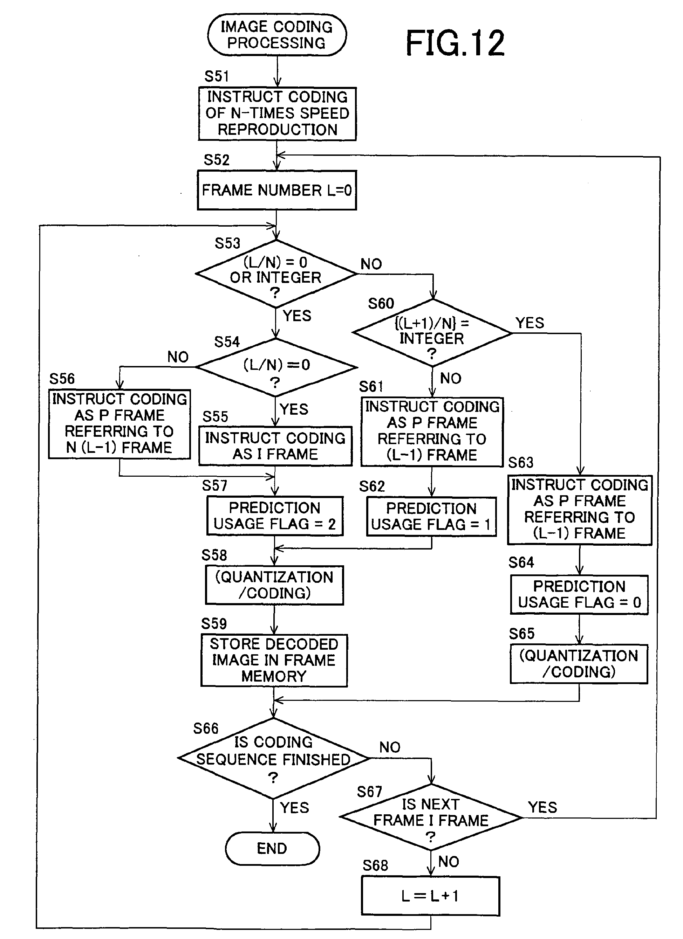

Fig. 12 shows a procedure for carrying out the image code processing in the embodiment 2 described above by the control unit 112 of the image coding device 100 shown in Fig. 1. Fig. 12 is a flowchart explaining a different example of the processing procedure in the image coding device according to the present invention as the embodiment 2. Note that although (quantization/coding) processing shown at steps S58, S65 of Fig. 12 is not a processing means to which the control unit 112 directly relates, it is additionally described to show the overall flow of processings.

In the embodiment of the code processing procedure in Fig. 12, processing from steps S51 to S59 and processing from steps S66 to S68 are entirely the same as processing from steps S11 to S19 and processing from steps S23 to S25 in the embodiment of the code processing procedures of Fig. 10, respectively, and therefore, the detailed explanation of them is omitted here. However, the procedure of Fig. 12 is different from that of Fig. 10 on the point that the "prediction usage flag" is set to "1" at step S17, but it is set to "2" at step S57.

When (L/N) is neither 0 nor an integer at step S53 (step S53: NO), since (L/N) is a non-integer and thus an image is the image of a frame in a case in which it is not reproduced at an N-times speed, next, it is determined whether or not the image of the L-th present frame is an image to be referred to by a subsequent frames as a reference image (step S60). Note that, shown at step S60 of Fig. 12 is a case in which only the image of the frame located right in front of the 4f-th frame is not referred to from the subsequent frames as a bitstream for quadruple-speed reproduction to explain the case of the bitstream of Fig. 7(A).

In the present invention, the determination processing at step S60 is not limited to the above case. That is, for embodiment, the frame number (or, a rule as to the frame number) of an image which is not referred to from the subsequent frames in a plurality of frames, or inversely the frame number (or, a rule as to the frame number) of an image which is referred to from the subsequent frames as a reference image may be previously set and registered in a memory (not shown) in the control unit 112, and the control unit 112 may determine whether or not the image of the present frame is an image to be referred to from the subsequent frames as a reference image referring to the information registered in the memory.

When it is determined at step S60 that the image of the present frame having the L-th frame number is the image to be referred to from the subsequent frames as the reference image, that is, when it is not the image of the frame located right in front of the frame having the 4f-th frame number (step S60: NO), it is the reference image to be referred to from subsequent frames and is prediction coded as a P frame. Accordingly, the control unit 112 instructs the motion detection unit 111 to prediction code the image of the present frame as a P frame on referring to the (L-1)th frame, that is the frame located right in front of it, and to notify the variable length coding unit 105 of the frame number (L-1) as a reference image number (step S61).

Thereafter, the control unit 112 instructs the variable length coding unit 105 to set the "prediction usage flag" to "1" to shows that although the present frame is not the frame of the image for the N-times speed reproduction, it is a reference image to be referred to from subsequent frames (step S62). Then, the process goes to step S58 at which it is instructed to subject the present frame having the frame number L to orthogonal transformation /quantization and further to coding (step S58) and to store a decoded image whose quantization coefficient is subjected to inverse quantization in the frame memory 109 (step S59).

In contrast, when it is determined at step S60 that the image of the present frame having the L-th frame number is not an image to be referred to from the subsequent frames as a reference image, that is, it is the image of the frame located right in front of the frame having the 4f-th frame number (step S60: YES), it is coded as the P frame likewise in step S61. Accordingly, the control unit 112 instructs the motion detection unit 111 to prediction code the image of the present frame as the P frame on referring to the frame located right in front of the present frame and to notify the variable length coding unit 105 of the image number (L-1) as the reference image number (step S61).

Thereafter, the control unit 112 instructs the variable length coding unit 105 to set the "prediction usage flag" to "0" to show that the image of the present frame is not a reference image to be referred to from the subsequent frames (step S64). Then, the present frame having the frame number L is subjected to orthogonal transformation/quantization and further to coding (step S65), and the process goes to step S66. That is, since identification information image of the present frame having the frame number L is the image of the frame that is not referred to from the subsequent frames as the reference image, it is not necessary to store a decoded image in the frame memory 109.

Note that the processings at steps S61, S63 also show the case in which prediction coding is carried out using the image of the frame located right in front of the present frame in the bitstream for the N-times speed reproduction as the reference image to explain the case of the bitstream of Fig. 7(A) likewise step S60 described above. However, the present invention is not limited to the above case and may use the image of a frame arbitrarily designated from the frames of the already coded images as the reference image. As a method of specifically realizing the case of using an already coded image designated arbitrarily as the reference image, the frame numbers (or, a rule as to frame numbers) of the images, which are to be referred to as the reference image, may be previously registered in, for example, the memory (not shown) in the control unit 112 likewise the case described above at step S60.

Further, in the example of the code processing procedure shown in Fig. 12, the example of expanding the "prediction usage flag" described above and changing the setting thereof to "2" and "1", respectively described above in the embodiment 1 is shown as a method of notifying the image decoding device 200 that the image for high speed reproduction, which is certainly used when reproduction is carried out at the N-times speed designated as a set speed in coding, and the images other than the above image, which are not set for the high speed reproduction although they are referred to by other subsequent images are prediction coded by changing a method of selecting the reference image. However, the present invention is not limited to the above method and the "prediction usage flag" may be set to "1" to only show that image of the present frame is referred to from the other subsequent frames likewise in the case of the embodiment 1.

However, even in the case in which prediction coding is carried out by changing the method of selecting the reference image, when the "prediction usage flag" is set only to "1" to show the reference image to be referred to from the other subsequent frames, it cannot be presumed from the "prediction usage flag" whether or not the reference image is certainly used when reproduction is carried out at the high speed of the N-times speed when a coded bitstream to which reproduction at the high speed of the N-times speed is designated. To cope with the above case, it is necessary to separately store the value of the set speed "N" to the coded bitstream to show that the bitstream is created for reproduction at the N-times speed. Otherwise, the value of the set speed "N" may be notified from the image coding device 100 to the image decoding device 200 as auxiliary information other than the coded bitstream. Note that it is assumed that the speed N=4 in the explanation of the embodiment of the coded bitstream of Fig. 7 and the embodiment of the code processing procedure.

Next, operation when a bitstream, which is decoded as shown in Fig. 7, is decoded by the image decoding device 200 shown in Fig. 2 is explained. First, when the control unit 207 of the image decoding device 200 receives an instruction for subjecting a bitstream created for high speed reproduction at quadruple-speed to reproduction at quadruple-speed as fast as the set speed as described above, the control unit 207 instructs the variable length decoding unit 201 to decode the image of the frame having the frame number L of 4f of an input bitstream (image whose prediction usage flag" is set to "2") and to skip to the image header of a next frame without decoding the images of the frames which does not corresponding to the frame number L of 4f. Then, the control unit 207 instructs the frame memory 205 to store the image of the 4f-th frame whose "prediction usage flag" is set to "2".

That is, as shown in Fig. 7(A), the variable length decoding unit 201 decodes and displays the frame I0 and skips the frames P1, P2, P3. Next, the variable length decoding unit 201 decodes and displays the frame P4 and skips the frames P5, P6, P7. Thereafter, the variable length decoding unit 201 decodes and displays only the frames P5, P8, P12, P16 having the frame number L of 4f in the same manner. Here, it can be predicted from the "prediction usage flag" in the bitstream set to "2" or the value of the set speed "N" (in the embodiments of Figs. 7 and 12 described above, N=4) input to the image decoding device 200 as the auxiliary information of the bitstream that the control unit 207 instructs the variable length decoding unit 201 to decode and display only the frames P4, P8, P12, P16, ... having the 4f-th frame number.

At the time, since the reference images of the frames P4, P8, P12, P16, ... are the images of the frames 10, P4, P8, P12, ... stored in the frame memory 205, respectively, it is possible to normally decode and reproduce the frames P4, P8, P12, P16, ... having the frame number L of 4f regardless that processing is carried out to skip the frames P1, P2, P3, P5, P6, P7, P9, P10, P11, P13, P14, P15, ... having the frame numbers L other than 4f so that they are not decoded in the high speed reproduction at the N speed.

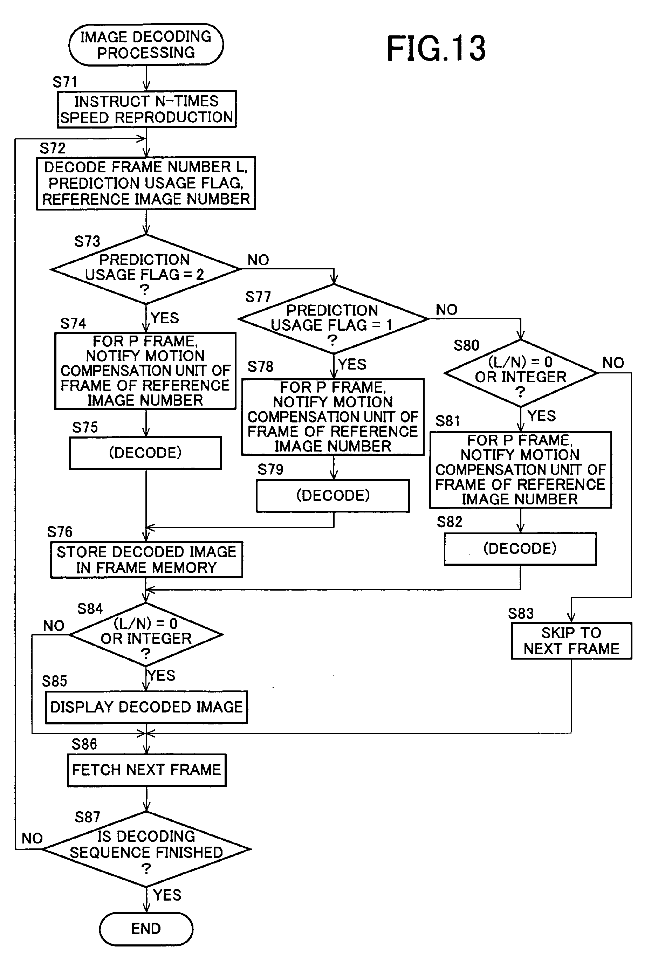

Fig. 13 shows a procedure for carrying out the image decode processing in the embodiment 2 described above by the control unit 207 of the image decoding device 200 shown in Fig. 2. Fig. 13 is a flowchart for explaining a different example of the processing procedure in the image decoding device according to the present invention as the embodiment 2. Note that although (decoding) processing shown at steps S75, S79, and S82 of Fig. 13 is not a processing means to which the control unit 207 directly relates, it is additionally described to show the overall flow of processings.

In the embodiment of the decode processing procedure of Fig. 13, the processing at S71, S72, the processings at the steps from S74 to S76, and further the processings at the steps from S80 to S87 are entirely the same as the processings at steps S31, S32, the processings at the steps from S34 to S36, and further the processings at the steps from S37 to S44 in the example of the decode processing procedure of Fig. 11, respectively, the detailed explanation thereof is omitted here.

Whether or not the present frame is a frame the image of which is certainly used as a reference image in the high speed reproduction of an N-times speed set as a set speed in coding is determined based on whether or not the "prediction usage flag" is set to "2" (step S73), and when the "prediction usage flag" is set to "2" (step S73: YES), the process goes to the processings at steps S74 to S76, and when the frame is a P frame, the frame shown by the "reference image number" of the present frame is notified to the motion compensation unit 206 in an entirely similar manner as the processings at steps S34 to S36 in Fig. 11 (step S74). Thereafter, the L-th frame is decoded (step S75), and a decoded image is stored to the frame memory 205 as a reference image to be referred to by a subsequent frames (step S76).

In contrast, when the "prediction usage flag" is not set to "2" at step S73 (step S73: NO), it is determined whether or not the "prediction usage flag" is set to "1" to determine whether or not the present frame is the frame of an image referred to from the subsequent frames although it is not the reference image certainly used for the high speed reproduction of the N-times speed (step S77). When the "prediction usage flag" is not set to "1" (step S77: NO), since the image of the present frame is the image of a frame which is not used as the reference image of the subsequent frame, the process goes to the processings at steps S80 to S87 and carries out skip processing in an entirely similar manner in the processings at steps S37 to S44.

Further, when the "prediction usage flag" is set to "1" (step 577: YES), the frame shown by the "reference image number" of the present frame is notified to the motion compensation unit 206 (step S78), the bitstream is inverse quantized and inverse orthogonal transformed and a decoded image is created (step S79), and then the processing goes to step S76 to instruct the frame memory 205 to store the decoded image.

Note that, in the example of the coded bitstream in Fig. 7 and the example of the code processing procedure in Fig. 12 described above, the already coded image to be referred to when the P frame is prediction decoded at steps S78 and S81 is the image of the frame having the (L-1)-th frame number and located right in front of the present frame having the L-th frame number.
Further, when reproduction is carried out at the same reproduction speed as the set speed for the high speed reproduction used in coding, that is, when high speed reproduction for reproducing and displaying only the images of the frames whose "prediction usage flag" is set to "2", it is instructed to the variable length decoding unit 201 to entirely omit the processings at steps from S77 to S82, to skip decode processing to the leading end of a next frame (step: S83) when the "prediction usage flag" is not set to "2" (step S73: NO), and then the process goes to step S86, thereby the amount of processing can be more reduced in high speed decoding.

Further, when a bitstream for N-times speed reproduction is reproduced at a high speed of the same N-times speed as in a case in which a bitstream for quadruple-speed reproduction is reproduced at quadruple-speed, it is sufficient to store only the image of one frame having the Nf-th frame number in the frame memory 205. However, when a bitstream is ordinarily reproduced (reproduced at single-speed) or a bitstream for N-times speed reproduction is reproduced at a high speed different from the N-times speed, it is necessary to store the images of two frames in the frame memory 205 as explained in the coding procedure described above. That is, when the bitstream for the N-times speed reproduction is reproduced ordinarily (reproduced at single-speed) or at a high speed different from the N-times speed, the image of the one frame is separately used as a reference image also as to the images of the frames whose frame numbers are other than Nf.

As described above, in the embodiment 2, it is possible to suppress the decrease of prediction coding efficiency and to prevent the deterioration of image quality while reducing the intervals between the image of the present frame to be coded and the reference image and realizing high speed reproduction by storing a plurality of reference images in the frame memory 205 in a bitstream composed only of the I frame and the P frame and appropriately changing a reference image depending on an image.

### [Embodiment 3]

Next, an embodiment 3 of the image coding device and the image decoding device according to the present invention that is different from the embodiments 1 and 2 described above is explained. An arrangement of the image coding device and the image decoding device in the embodiment 3 may be the same as the image coding device 100 and the image decoding device 200 shown in Figs. 1 and 2. However, in the embodiment 3, the prediction coding efficiency can be more improved even in a bitstream which can be reproduced at a high speed by carrying out coding using images of a plurality of frames as reference images in prediction coding of the image of each P frame different from the embodiments 1 and 2.

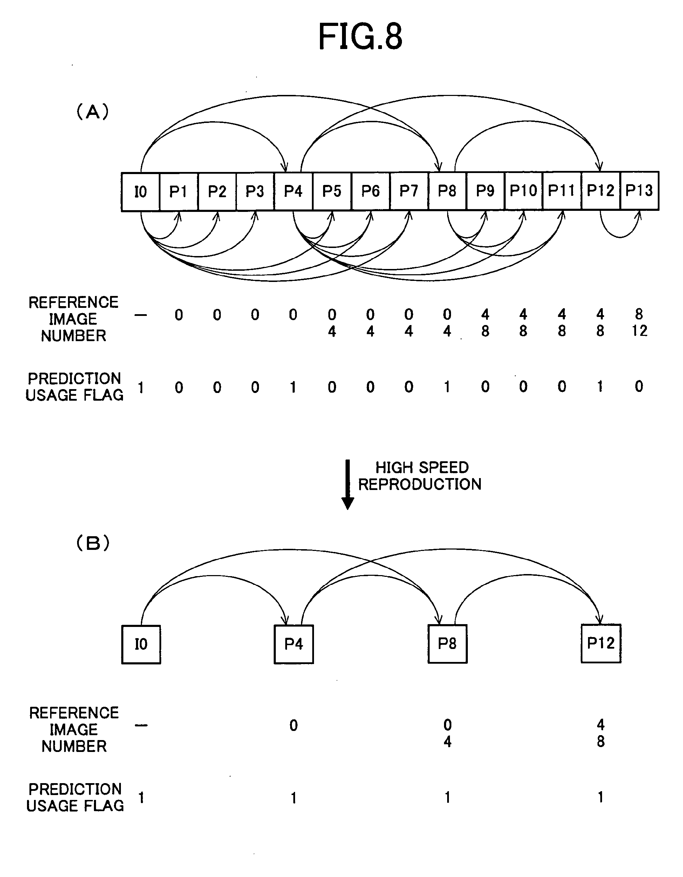

Fig. 8 are schematic views showing an example of an inter-frame prediction structure when a bitstream for quadruple-speed reproduction is reproduced at quadruple-speed as the embodiment 3 of the image coding device and the image decoding device according to the present invention and shows an example of operation for carrying out prediction coding using the images of the plurality of frames by the image of one P frame as the reference images. Fig. 8(A) shows how a bitstream for quadruple-speed reproduction is created by the image coding device 100, and Fig. 8(B) shows how the bitstream created in Fig. 8(A) is decoded by being reproduced at quadruple-speed on the image decoding device 200 side.

Fig. 8(B) is different from the cases of Figs. 4 and 7 described above as the embodiments 1 and 2 and arranged such that the reference image of the image of the frame having the frame number L of 4f is not limited to the image of one frame having the 4 (f-1)-th frame number and located just in front of it, and the images of the already coded frames having 4(f-n)-th frame numbers each of which is a multiple of 4 (however, f=0, 1,2, ..., and n is an integer within the range of 0≤n≤f) are used as the reference image so that the images of the plurality of already coded frames are referred to. Further, in the embodiment 3, the images of the frames other than those of the frame having the frame number L of 4f also use only the images of the already coded frames having the {4([L/4]-n)}-th frame numbers each of which is a multiple of 4 (here, [x] is an integer obtained by neglecting decimals) as reference images. However, the embodiment 3 is arranged such that the reference images are not limited to the images of one frame, and the images of the plurality of already coded frames are referred to, different from the case of the embodiment 1.

That is, Fig. 8 (B) shows an example that when a bitstream for quadruple-speed reproduction is created, coding is carried out using only the images having the frame numbers of 4f(f=0,1,2, ...) as the reference images. However, different from Fig. 4 described above as the embodiment 1 , Fig. 8 (B) shows an example in which frames P5, P6, P7, P8, for example, are prediction coded referring to not only the image of a nearest P4 frame but also the image of an I0 frame, the fourth previous frame of the frame P4 as reference images. Further, frames P9, P10, P11, P12 are prediction coded using not only the image of the nearest frame P8 but also the image of the frame P4, the fourth previous frame of the frame P8. Thereafter, the reference image sequentially moves every four frames in the same manner. Note that, to prevent the decrease of the prediction coding efficiency, at least the image of the frame having the {4([L/4] - 1)}-th frame number located nearest to the P frame having the frame number L is included out of the frames having the frame numbers {4[L/4]-n)} located at every frame intervals set by a set speed.

Note that, the frames up to the fourth frame following to the I frame (frames P1, P2, P3, P4) are prediction coded together on referring to only the image of the frame I0 likewise in the case shown in Fig. 4 described above as the embodiment 1 because there is not any other image of the already coded frames to be referred to except the image of the 10 frame.

Accordingly, the frames P1, P2, P3, P4, which refer to only one already coded frame having the 4f (f=0, 1, 2, ...) - t h frame number have only one type of "reference image number" exceptionally set to 0, the frames P5, P6, P7, P8 have two types of "reference image number" set to 0 and 4, and the frames P9, P10, P11, P12 have two types of "reference image number" set to 4 and 8, and this is the same thereafter. Further, the "prediction usage flag" of the images of the frames I0, P4, P8, P12, ... and the image of the frame having the frame number L of 4f are set to "1" showing reference images, respectively, and the "prediction usage flag" of the images of the frames P1, P2, P3, P5, P6, P7, P9, P10, P11, ... and the images of the frames having the frame numbers L other than 4f remain "0" showing that they are not reference images.

Note that, although the embodiment shows the case in which two frames are used as the reference images, the present invention is not limited to the two frames, and it is needless to say that the already coded images of any number of frames more than two frames may be used as reference images.
When the P frame, to which a plurality of types (in the embodiment, two types) of the reference image numbers are set, is prediction coded, it is possible to prediction code the already coded images of a plurality of frames to which the reference image numbers are set by appropriately switching any of already coded images in a slice unit, MB unit or block unit as a reference image out of the already coded images of the plurality of frames, and the coding is carried out by recording the frame number (reference image number) of the already coded image referred to in each unit to the header portion and the like of a bitstream.

In contrast, on the image decoding device 200 side in which the bitstream coded at quadruple-speed as the set speed is decoded, when reproduction at quadruple-speed, which is as fast as the set speed, is instructed, only the images of the frames (frames 10, P4, P8, P12, ...) having the frame number L of 4f are decoded and displayed as shown in Fig. 8(B). However, when the frames P4, P8, P12, ... are prediction coded, the frames I0, 10 and P4, P4 and P8, ... are referred to, respectively as reference images from the reference image numbers, and further they are prediction decoded using the reference image numbers of the respective units recorded in the header and the like of the bitstream. With this arrangement, it is possible to carry out prediction decode using and appropriately switching the reference images of the respective units recorded in the header portion and the like of the bitstream out of the plurality of reference images, thereby a reproduced image having more excellent image quality can be decoded while enabling high speed reproduction.

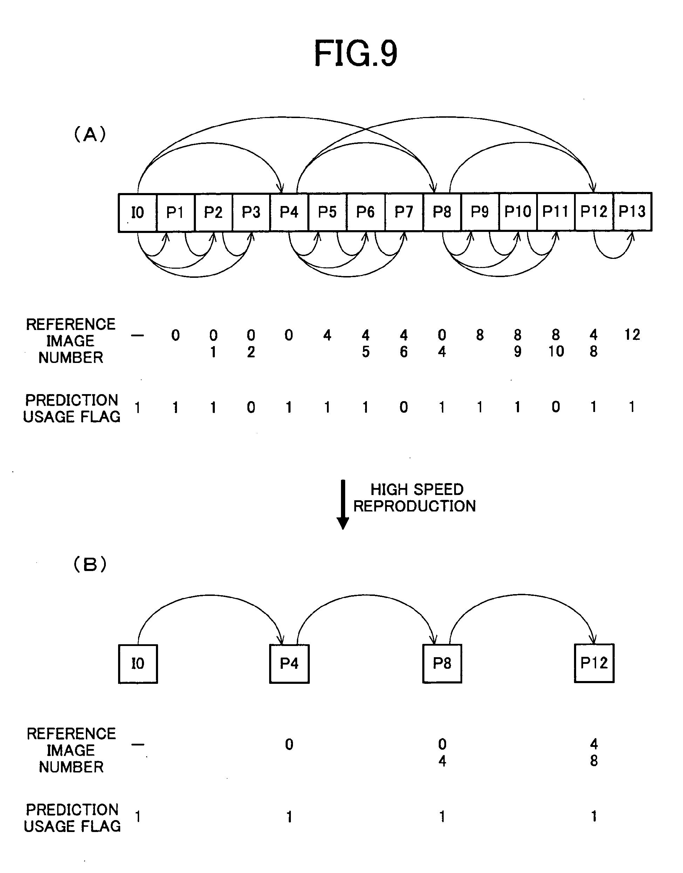

Next, an embodiment of coding carried out using the images of a plurality of frames for each frame and using Fig. 9 is explained as a case different from that in Fig. 8. Fig. 9 are schematic views showing a different example of an inter-frame prediction structure when a bitstream for quadruple-speed reproduction is reproduced at quadruple-speed as the embodiment 3 of the image coding device and the image decoding device according to the present invention and shows operation of an example, which is different from the example shown in Fig. 8 which the image of one frame is prediction coded using the images of a plurality of frames as reference images.

That is, Fig. 8 shows a case in which when the bitstream for quadruple-speed reproduction is created, the image of the nearest frame whose frame number is a multiple of 4 and further the image of the fourth previous frame are used as two reference images. Whereas, Fig. 9 shows a case in which the image of the frame right in front of the nearest frame is used as a reference image in place of using the image of the fourth previous frame although it is the same in the case of Fig. 8 that the image of the nearest frame whose frame number is a multiple of 4 is used as a reference image for the images of the frames whose frame numbers L are not multiple of 4. Fig. 9(A) shows how the bitstream for the quadruple-speed reproduction is created by the image coding device 100, and Fig. 9(B) shows how the bitstream created in Fig. 9(A) is decoded by being reproduced at quadruple-speed on the image decoding device 200 side.

For further explanation, the case of Fig. 7 described above as the embodiment 2 shows the example in which the images having the frame numbers L of 4f (f = 0 , 1 , 2, ...) which are multiple of 4 are coded using only the already coded images of fourth previous frame as reference images, and the images of the frames other than the 4f-th frames whose frame numbers L are not a multiple of 4 are coded using only the images of the frames just before them as a reference image. However, Fig. 9(A) shows an example in which when the bitstream for the quadruple-speed reproduction is created, to permit each frame to use two reference images, the images of the frames having the frame number L of 4f which is a multiple of 4 further use the images of the fourth previous frames from them, and the images of the frames other than the 4f-th frames whose frame numbers L are not multiple of 4 use the images of the nearest frames whose frame numbers are multiple of 4 as described in Fig. 8 in addition to Fig. 7.

That is, Fig. 9(A) shows an embodiment in which when the bitstream for the quadruple-speed reproduction is created, since the reference image of the frame P4 whose frame number L is a multiple of 4 as the set speed is only one frame I0, the fourth previous frame from it as an already coded frame to be referred to, the reference image uses the only one I frame, further the reference image of the frame P1 whose frame number L is a multiple of 4 and which is located behind the frame 10 uses the frame 10 having a multiple of 4, and the reference images of the remaining frame P2, P3 whose frame numbers L are not multiple of 4 use not only the frames P1, P2 located right in front of them but also the frame I0 located nearest to them and set to a multiple of 4, respectively different from Fig. 7 as the embodiment 2. Further, the reference image of the frame P8 whose frame number L is a multiple of 4 uses not only the frame P4, the fourth previous frame from it but also the frame I0, the further fourth previous frame from it, the reference image of the frame P5 having the frame number L set to a multiple of 4 and located behind the frame P4 uses the frame P4 set to a multiple of 4 and located in front of it, and the reference images of the remaining frames P6, P7 whose frame numbers L are not set to a multiple of 4 use not only the frames P5, P6 located right in front of them but also the nearest frame P4 set to a multiple of 4.

Further, the frame P12 whose frame number L is set to a multiple of 4 is prediction coded using the frame P8 located in front of it across four frames and the frame 4 located in front of the frame 8 further across four frames as reference images, the frame P9 having the frame number L set to a multiple of 4 and located behind the frame 8 is prediction coded using the frame P8 set to a multiple of 4 and located in front of it as a reference image, and the remaining frames P10, P11 whose frame numbers L are not set to a multiple of 4 are prediction coded using the frames P9, P10 right in front of them and the nearest frame P8 set to a multiple of 4 as reference images. Thereafter, the reference image sequentially moves every four frames in the same manner.

Accordingly, the "reference image numbers" of the frames P1, P2, P3, P4 are set to 0, 0, and 1, 0 and 2, 0, respectively, the "reference image numbers" of the frames P5, P6, P7, P8 are set to 4, 4 and 5, 4 and 6, 0 and 4, respectively, the "reference image numbers" of the frames P9, P10, P11, P12 are set to 8, 8 and 9, 8 and 10, 4 and 8, respectively, and this is the same thereafter. Further, the "prediction usage flags" of the images of the frames 10, P1, P2, P4, P5, P6, P8, P9, P10, P12, ... and the images of the frames having the frame numbers L of 4f, (4f+1), and (4f+2) are set to "1" showing the reference images, respectively, and the "prediction usage flags" of the images of the frames P3, P7, P11, ... and the images of the frames having the frame numbers L of (4f+3) remain "0" showing that they are not reference images.

Note that, although the embodiment shown in Fig. 9 shows the case in which two frames are used as reference images, the present invention is not limited to the two frames, and it is needless to say that the already coded images of any number of frames more than two frames may be used as reference images. Further, the embodiment shown in Fig. 9 shows the case in which the images of the frames whose frame numbers L are not a multiple of 4 use the images of two frames, that is, the image of the frame right in front of them and the image of the nearest frame whose frame number is a multiple of 4 as reference images. However, the present invention is not limited to the case, and, for example, the image of the second previous frame from them may be used as the reference image in place of the image of the nearest frame whose frame number is a multiple of 4, and further a plurality of arbitrarily designated and already coded images may be used.

When the P frame, to which a plurality of types (in this embodiment, two types) of the reference image numbers are set, is prediction coded, it is possible to prediction code the P frame by appropriately switching any already coded images in a slice unit, MB unit or block unit out of the already coded images of the plurality of frames, and the frame numbers (the reference image numbers) of the already coded images referred to in each unit are recorded in the header portion and the like of a bitstream and coded.

In contrast, on the image decoding device 200 side in which the bitstream coded at quadruple-speed as the set speed is decoded, when reproduction at quadruple-speed, which is as fast as the set speed, is instructed, only the images of the frames (frame 10, P4, P8, P12, ...) having the frame number L of 4f are decoded and displayed as shown in Fig. 9(B). However, when the frames P4, P8, P12, ... are prediction coded, the frames I0, I0 and P4, P4 and P8, ... are referred to, respectively as reference images from the reference image numbers, and further they are prediction decoded using the reference image numbers of the respective units recorded in the header and the like of the bitstream. With this arrangement, it is possible to carry out prediction decode using and appropriately switching the reference images of the respective units recorded in the header portion and the like of the bitstream out of the plurality of reference images, thereby a reproduced image having more excellent image quality can be decoded while enabling high speed reproduction.

Further, when prediction coding is carried out by changing the method of selecting the reference images depending on the images for high speed reproduction, which are certainly used to carry out reproduction at the set speed designated in coding and on the images other than the above images, there can be employed, also in the embodiment of the coded bitstream in Fig. 9(A), a method of setting the "prediction usage flag" to "2" for the already coded images of the images for the high speed reproduction which are certainly used in the image coding device 100, setting the "prediction usage flag" to "1" for the already coded images other than the above ones used for prediction coding, setting the "prediction usage flag" to "0" for the images which are not used for the prediction coding, and notifying them to the image decoding device 200 likewise the expansion method of the "prediction usage flag" described above in the embodiment 2 as a method of notifying the image decoding device 200 that the image of a frame selected as a reference image is selected by the different selection method.

When the values of the "prediction usage flag" are limited to the two types of "0" and "1", the image decoding device 200 cannot presume whether or not a reference image is certainly used for high speed reproduction from the value of the "prediction usage flag" likewise as in the case described in the embodiment 2. To cope with the above case, a value of a set speed "N" showing that a bitstream is created for N times speed reproduction may be separately stored in a coded bitstream and coded. Otherwise, the value of the set speed "N" may be notified from the image coding device 100 to the image decoding device 200 as auxiliary information other than the coded bitstream.

Note that, in the embodiment 3 shown in Fig. 9 in which the coded bitstream is created, it is necessary to change the reference image number notified at step S56 in the example of the code processing procedure in Fig. 12. That is, the reference image number, which is referred to at step S56 is not limited to the {N(L-1)}-th frame number, and further the {N(L-2)}-th frame number may be added, or any one frame may be selected and added from the already coded images stored in the frame memory 109 and shown by the {N (L-m)}-th frame number (here, m is an integer of at least 2) depending on circumstances.

Further, it is also necessary to change the reference image number to be notified at steps S61 and S63 of Fig. 12. That is, the reference image number, which is referred to at steps S61 and S63, respectively, is not limited to the (L-1)-th frame number, and further the {N[L/N]}-th frame number (here, [x] is an integer obtained by neglecting a decimal portion) located nearest to the present fame having the frame number L and set to a multiple of 4 may be added, or any one frame may be selected and added from the already coded images stored in the frame memory 109 depending on circumstances.

The embodiments 1, 2, and 3 described above explain only the two cases in which the coded bitstream created by the image coding device 100 is reproduced at the double-speed and the quadruple-speed designated from the user. However, it can be easily understood from the above detailed description that the designated set speed can be generally expanded to any arbitrary speed, that is, to an N-times speed (here, N is a real value of at least 1) as the image coding device and the image decoding device according to the present invention.

Note that the case, in which the I frames for carrying out coding only by intra-coding appear periodically, is shown in the explanation of the embodiments 1, 2, and 3. However, in the image coding device and the image decoding device according to the present invention, it can be easily understood from the above detailed description that even a case in which I frames are included in a bitstream at random and a case in which an I frame is employed only at a leading end can be also expanded entirely in the same manner.

Further, in the explanation of the embodiments 1, 2, and 3 described above, the case, in which the control unit 207 of the image decoding device 200 instructs the variable length decoding unit 201 to skip a bitstream of a frame which need not be decoded. However, the processing for skipping the bitstream is not carried out only by the variable length decoding unit 201. That is, it can be also carried out in such a manner that the user indicates a reproduction speed to a de-multiplex unit, which is located in front of the variable length decoding unit 201 and is not shown in Fig. 2, so that the de-multiplex unit skips the bitstream of the frame which need not be decoded to prevent the bitstream of the skipped frame from being delivered to the image decoding device 200 side.

Further, in the explanation of the embodiments 1, 2, and 3 described above, the example, in which the user instructs the control unit 112 of the image coding device 100 to create a bitstream for N-times speed reproduction, is shown. However, the bitstream may be created by using the value of a predetermined set speed "N" set as a default value in place of that the user designates N-times speed reproduction every time.

## Claims

1. An image coding device for coding images as a bitstream only by means of intra-coding and one-direction prediction coding, comprising prediction usage information coding means for coding first data as prediction usage information showing whether or not the images of I frames, in which the images are coded only by means of the intra-coding, or the images of P frames, in which the images are coded by means of the intra-coding and the one-direction prediction coding are images used as reference images to be referred to from other subsequent frames; reference information coding means for coding second data showing the frame numbers of images to be referred to by the P frames as reference information; and high speed reproduction coding means for referring to the images of the frame numbers shown by the second data out of the reference images shown by the first data when the P frames are coded, coding the P frames of the frame numbers at every frame intervals set for high speed reproduction according to a previously designated set speed to create a bitstream for the high speed reproduction and the P frames of the remaining frame numbers which are not set for the high speed reproduction, respectively, storing the coded images of the P frames of the frame numbers at the every frame intervals set for the high speed reproduction, setting the first data as the prediction usage information showing that the coded images of the P frames are referred to from the other subsequent frames, and instructing the prediction usage information coding means to code the first data.

2. The image coding device as defined in claim 1, wherein, as to the respective P frames within the ranges separated at the every frame intervals set for the high speed reproduction according to the set speed, the high speed reproduction coding means sets the second data as the reference information showing that the reference images of the same frame number are used as images to be referred to from the reference images when the P frames of the frame numbers at the every frame intervals set for the high speed reproduction are coded and as images to be referred to from the reference images when the P frames of the remaining frame numbers which are not set for the high speed reproduction are coded and instructs the reference information coding means to code the second data.

3. The image coding device as defined in claim 1 or 2, wherein the reference images are disposed only to periodical positions, and the images at every N frames (N: an integer of 2 or more) including the I frames and using the I frames as base points are used as the reference images shown by the first data.

4. The image coding device as defined in claim 1, wherein, as to the respective P frames within the ranges separated at the every frame intervals set for the high speed reproduction according to the set speed, the high speed reproduction coding means sets the second data as the reference information showing that the images of different frame numbers are referred to by images to be referred to from the reference images when the P frames of the frame numbers at the every frame intervals set for the high speed reproduction are coded and by images to be referred to from the reference images when the P frames of the remaining frame numbers which are not set for the high speed reproduction are coded and instructs the reference information coding means to code the second data.

5. The image coding device as defined in claim 4, wherein the images to be referred to from the reference images when the P frames of the frame numbers at the every frame intervals set for the high speed reproduction are coded are the images at every N frames (N is an integer of 2 or more) including the I frames and using the I frames as base points, and images to be referred to from the reference images, when the P frames of the remaining frame numbers which are not set for the high speed reproduction are coded, are the images of the frames located at arbitrary positions out of the coded images.

6. The image coding device as defined in claim 5, wherein the intervals at the every N frames, at which reference images to be referred to from the reference images are shown, when the P frames of the frame numbers at the every frame intervals set for the high speed reproduction are coded, are frame intervals set according to the set speed previously designated to create the bitstream for the high speed reproduction, and reference images to be referred to from the reference images, when the P frames of the remaining frame numbers which are not set for the high speed reproduction are coded, are the images of the frames located in front of the frames to be coded.

7. The image coding device as defined in claim 5 or 6, wherein when the high speed reproduction coding means sets the first data, which shows whether or not images are used as reference images from the other subsequent frames, as prediction usage information, the high speed reproduction coding means sets the first data to a different value for the images used from the other subsequent frames as reference images depending on whether the images are the images of the frame numbers at the every frame intervals set for the high speed reproduction or the images of the remaining frame numbers which are not set for the high speed reproduction.

8. The image coding device as defined in any one of claims 1 to 7, wherein when the images of the respective P frames are coded, the coded images of a plurality of frames can be referred to as a reference image to be referred to in each of the P frames.

9. The image coding device as defined in claim 8, wherein when any of the coded images of the plurality of frames is referred to in each of the P frames, it is possible to refer to the coded images of different frames in any unit of a slice unit, a macroblock unit, or a block unit in the respective P frames to be coded as the reference images, and the frame numbers showing the reference images of each unit are coded as the header information of the bitstream.

10. The image coding device as defined in claim 8 or 9, wherein the coded images of the plurality of frames, which can be referred to as the reference images in each of the respective P frames, include at least the images of the frame numbers at the every frame intervals located nearest to the frames to be coded out of the images of the frame numbers at the every frame intervals set according to the previously designated set speed.

11. An image decoding device for decoding a bitstream obtained by coding images only by means of intra-coding and one-direction prediction coding, comprising prediction usage information decoding means for decoding first data as prediction usage information showing whether or not the images of I frames, in which the images are coded only by the intra-coding, or the images of P frames, in which the images are coded by means of the intra-coding and the one-direction prediction coding are images used as reference images to be referred to from other subsequent frames; reference information decoding means for decoding second data showing the frame numbers to be referred to by the P frames as reference information; and high speed reproduction decoding means for referring to the images of the frame numbers shown by the second data out of the reference images shown by the first data when the P frames are decoded and decoding the P frames of the frame numbers at every frame intervals set for high speed reproduction according to a previously designated reproduction speed.

12. The image decoding device as defined in claim 11, wherein when the high speed reproduction decoding means decodes the P frames of the coded bitstream coded according to the set speed previously designated for the high speed reproduction, the high speed reproduction decoding means can decode the P frames using a reproduction speed of an arbitrary value different from the set speed by referring to the image of the frame number shown by the second data of the frame to be decoded as reference information out of reference images shown by the first data as prediction usage information.

13. The image decoding device as defined in claim 11 or 12, wherein the reference images shown by the first data as prediction usage information are disposed only to periodical positions and are decoded images at every N frames (N: an integer of 2 or more) including the I frames and using the I frames as base points, and, when the P frames of the frame numbers at every frame intervals set for the high speed reproduction according to the previously designated reproduction speed are decoded, the P frames are decoded referring to the decoded images of the frame numbers at the every N frames shown by the first data as reference information.

14. The image decoding device as defined in claim 13, wherein when the P frames of the coded bitstream coded according to the set speed previously designated for the high speed reproduction are decoded, the intervals of the every N frames at which the reference images are shown are the frame intervals set according to the set speed.

15. The image decoding device as defined in any one of claims 11 to 14, wherein when the images of the respective P frames are decoded, the decoded images of a plurality of frames can be referred to as a reference image to be referred to in each of the P frames.

16. The image decoding device as defined in claim 15, wherein when any of the decoded images of the plurality of frames is referred to, it is possible to refer to different decoded images in any unit of a slice unit, a macroblock unit, or a block unit in the respective P frames to be decoded as the reference images, the frame numbers showing the reference images of each unit is obtained referring to the header information of the coded bitstream, and the images of corresponding units in the respective frames are decoded using the decoded images of the obtained frame number.

17. The image decoding device as defined in claim 15 or 16, wherein when the P frames of the coded bitstream coded according to the set speed previously designated for the high speed reproduction are decoded, the decoded images of a plurality of frames, which can be referred to in each of the P frames as the reference image, include at least the images of the frame numbers at the every frame intervals located nearest to the P frames to be decoded out of the images of the frame numbers at the every frame intervals set according to the set speed.

18. An image coding program for carrying out the function of an image coding device for coding images only by means of intra-coding and one-direction prediction coding by a computer as a program, wherein the image coding program carries out the function of the image coding device as defined in any one of claims 1 to 10 as the program.

19. An image decoding program for carrying out the function of an image decoding device for decoding a bitstream coded only by means of intra-coding and one-direction prediction coding by a computer as a program, wherein the image decoding program carries out the function of the image decoding device as defined in any one of claims 11 to 17 as the program.

## Amended claims

### Amended claims under Art. 19.1 PCT

**1.** (amended) An image coding device comprising prediction usage information coding means for coding first data as prediction usage information showing whether or not the images of I frames, in which the images are coded only by means of the intra-coding, or the images of P frames, in which the images are coded by means of the intra-coding and the one-direction prediction coding are images used as reference images to be referred to from other subsequent frames; reference information coding means for coding second data showing the frame numbers of images to be referred to by the P frames as reference information; and high speed reproduction coding means for referring to the images of the frame numbers shown by the second data out of the reference images shown by the first data when the P frames are coded, coding the P frames of the frame numbers at every frame intervals set for high speed reproduction according to a previously designated set speed to create a bitstream for the high speed reproduction and the P frames of the remaining frame numbers which are not set for the high speed reproduction, respectively, storing the coded images of the P frames of the frame numbers at the every frame intervals set for the high speed reproduction, setting the first data as the prediction usage information showing that the coded images of the P frames are referred to from the other subsequent frames, and instructing the prediction usage information coding means to code the first data.

**2.** The image coding device as defined in claim 1, wherein, as to the respective P frames within the ranges separated at the every frame intervals set for the high speed reproduction according to the set speed, the high speed reproduction coding means sets the second data as the reference information showing that the reference images of the same frame number are used as images to be referred to from the reference images when the P frames of the frame numbers at the every frame intervals set for the high speed reproduction are coded and as images to be referred to from the reference images when the P frames of the remaining frame numbers which are not set for the high speed reproduction are coded and instructs the reference information coding means to code the second data.

**3.** (canceled)

**4.** (amended) The image coding device as defined in claim 1, wherein, as to the respective P frames within the ranges separated at the every frame intervals set for the high speed reproduction according to the set speed, the high speed reproduction coding means sets the second data as the reference information showing that the images including different frame numbers are referred to by images to be referred to from the reference images when the P frames of the frame numbers at the every frame intervals set for the high speed reproduction are coded and by images to be referred to from the reference images when the P frames of the remaining frame numbers which are not set for the high speed reproduction are coded and instructs the reference information coding means to code the second data.

**5.** (canceled)

**6.** (canceled)

**7.** (canceled)

**8.** (amended) The image coding device as defined in any one of claims 1, 2 and 4, wherein when the images of the respective P frames are coded, the coded images of a plurality of frames can be referred to as a reference image to be referred to in each of the P frames.

**9.** (canceled)

**10.** (canceled)

**11.** (amended) An image decoding device comprising prediction usage information decoding means for decoding first data as prediction usage information showing whether or not the images of I frames, in which the images are coded only by means of the intra-coding, or the images of P frames, in which the images are coded by means of the intra-coding and the one-direction prediction coding are images used as reference images to be referred to from other subsequent frames; reference information decoding means for decoding second data showing the frame numbers to be referred to by the P frames as reference information; and high speed reproduction decoding means for referring to the images of the frame numbers shown by the second data out of the reference images shown by the first data when the P frames are decoded and decoding the P frames of the frame numbers at every frame intervals set for high speed reproduction according to a previously designated reproduction speed.

**12.** The image decoding device as defined in claim 11, wherein when the high speed reproduction decoding means decodes the P frames of the coded bitstream coded according to the set speed previously designated for the high speed reproduction, the high speed reproduction decoding means can decode the P frames using a reproduction speed of an arbitrary value different from the set speed by referring to the image of the frame number shown by the second data of the frame to be decoded as reference information out of reference images shown by the first data as prediction usage information.

**13.** (canceled)

**14.** (canceled)

**15.** (amended) The image decoding device as defined in claim 11 or 12, wherein when the images of the respective P frames are decoded, the decoded images of a plurality of frames can be referred to as a reference image to be referred to in each of the P frames.

**16.** (canceled)

**17.** (canceled)

**18.** (canceled)

**19.** (canceled)
